Europäisches Patentamt

(19) European Patent Office

Office européen des brevets

(11) Publication number: **0 003 266**
B1

## (12) EUROPEAN PATENT SPECIFICATION

(45) Date of publication of patent specification: **30.03.83**

(21) Application number: **78300924.4**

(22) Date of filing: **29.12.78**

(51) Int. Cl.³: **B 01 F 13/02,**
**C 01 B 25/22, B 01 F 1/00,**
**B 01 D 19/02**

(54) **Apparatus for contacting solid particles with a liquid; apparatus and process for the production of phosphoric acid.**

(30) Priority: **29.12.77 US 865556**
**05.01.78 US 866990**
**05.01.78 US 866989**
**05.01.78 US 866988**
**05.01.78 US 866987**
**06.01.78 US 867556**
**26.05.78 US 909896**

(43) Date of publication of application:
**08.08.79 Bulletin 79/16**

(45) Publication of the grant of the patent:
**30.03.83 Bulletin 83/13**

(84) Designated Contracting States:
**BE DE FR GB IT NL**

(56) References cited:
**BE - A - 856 582**
**GB - A - 1 063 388**
**US - A - 3 416 889**
**US - A - 3 544 269**
**US - A - 3 666 413**

(73) Proprietor: **Occidental Petroleum Corporation**
**10989 Wilshire Boulevard**
**Los Angeles California 90024 (US)**

(72) Inventor: **Ore, Fernando N.**
**14732 Glenn Drive**
**Whittier, California 90602 (US)**
Inventor: **Ellis, John David**
**7311 Mast Drive**
**Huntingdon Beach, California 92648 (US)**
Inventor: **Moore, James Harold**
**1294 Ruggles**
**La Verne, California 91750 (US)**
Inventor: **Gragg, Frederick Michael**
**20912 Avenida Amopola**
**El Toro, California 92630 (US)**
Inventor: **Adams, Allen Salter**
**1418 Fieldcrest Drive**
**Jasper, Florida 32052 (US)**
Inventor: **Self, James**
**P.O. Box 300**
**White Springs, Florida 32096 (US)**
Inventor: **Caesar, Michael Brian**
**1326 Bali**
**Lake City, Florida 32055 (US)**

(74) Representative: **Jack, Bruce James et al,**
**FORRESTER & BOEHMERT Widenmayerstrasse**
**4/1**
**D-8000 Munchen 22 (DE)**

Apparatus for contacting solid particles with a liquid; apparatus and process for the production of
phosphoric acid

This invention concerns processes and apparatus for contacting a particulate solid with a liquid for the purpose of dissolution and/or reaction and although in certain of its broadest aspects the invention has general applicability to such processes and the apparatus used therein, the invention is especially applicable to, and has great advantages in connection with, wet processes for the production of phosphoric acid involving the dissolution and reaction of phosphate rock in an acid. Accordingly the invention will be discussed and described herein in relation to such applications thereof.

Phosphoric acid has been prepared by the wet process for many years. The wet process involves the reaction of phosphatic solid materials, herein termed phosphate rock, in a reaction mass that usually comprises calcium sulphate, monocalcium phosphate, phosphoric acid and sulphuric acid. Three variants of the process are usually designated by the names of forms of the by-product calcium sulphate produced; namely, the gypsum of dihydrate process, the hemi-hydrate process, and the anhydrite process. In all such processes the present invention can be useful in the reaction of phosphoric acid and phosphate rock. The type of by-product is mainly dependent upon the temperature of the system and the $P_2O_5$ concentration of the liquid phase of the slurry. Other factors such as fluorine concentration, alumina concentration, and sulphuric acid concentration play a less important role.

As is frequently illustrated by composition diagrams (plotting temperature versus acid strength), gypsum, $(CaSO_4, 2H_2O)$ is the by-product formed when the wet process is run at a temperature of about 90°C or less and a $P_2O_5$ concentration of up to about 30% in the liquid portion of the slurry. With the temperature within the range about 80° to about 120°C and the $P_2O_5$ concentration about 40% in the liquid phase, the hemihydrate, $CaSO_4 . \frac{1}{2}H_2O$ is the by-product. Adjusting the temperature and the concentrations, for instance, to 75°C and 40% $P_2O_5$ results in a mixture of gypsum and hemihydrate which is very unstable. An unstable system such as this causes trouble during filtration owing to the hardening or setting up of the gypsum-hemihydrate solid on the filter. Care must be exercised in maintaining the proper temperature and $P_2O_5$ concentrations in the process being run in order to avoid such problems. $CaSO_4$ anhydrite is produced at temperatures of about 130°C and $P_2O_5$ concentrations greater than 30%. This latter process is most difficult to run owing to severe corrosion at the higher temperatures and the instability of the anhydride during processing.

The present invention is particularly useful in the manufacture of phosphoric acid by the hemihydrate, or as it is sometimes called, the semihydrate, variant of the wet process. Some aspects of our preferred method of practising the hemihydrate process are also the subject of other patents and applications in our name, in various countries, one such patent being Belgian Patent 856582. Generally, our preferred method comprises adding phosphate rock and phosphoric acid (which can contain sulphuric acid and is preferably pre-mixed in a separate slurry tank) to a first reaction vessel or set of reactors, in parallel or series, (the "dissolver") which contains a first slurry comprising calcium sulphate hemihydrate, monocalcium phosphate, and phosphoric acid. The "soluble" or "excess" sulphate content (i.e., the excess or deficiency of sulfate ions over calcium ions) of the first slurry in the first reaction vessel can be maintained (e.g. by addition of sulphuric acid) at a concentration of about +0.7% to about —4% or even —8% (more preferred 0.0 to —6%), as determined for example, by the well-known gravimetric analysis. It is more preferred to be at a negative sulphate (e.g. excess Ca+2).

The sulphuric acid in the first (dissolver) vessel is usually contained in "recycle" phosphoric acid from a filtration step and/or sulphuric acid contained in a side stream or recycle slurry from the second reaction vessel. When two dissolver vessels are used in series, we prefer to operate the system in such manner that slurry from the second vessel (which has an excess of $Ca^{+2}$, therefore, no free sulphuric acid) is used as the dissolution medium in the first dissolver vessel (e.g., the first vessel would be at about —6% $SO_4$ and the second vessel at about —4%, caused by addition of sulphuric acid only to the second vessel).

Sulphuric acid is added to the second reaction vessel which contains a second slurry comprising calcium sulphate hemihydrate, monocalcium phosphate, sulphuric acid and phosphoric acid. The sulphuric acid reacts with the monocalcium phosphate and any residual, undissolved phosphate rock, producing calcium sulphate hemihydrate and phosphoric acid. The soluble or excess sulphate concentration of the second slurry is maintained at a positive value (about +0.7% to about +4.5%).

Sulphuric acid is added in amounts such that the sulphate content of the added acid and the sulphate content of the added rock is equivalent to about 90% to about 100% (more preferred 93—99.5%) of the stoichiometric amount of sulphate required to react with calcium added in the phosphate rock to form calcium sulphate hemihydrate.

As is well-known in the art, sulphate and/or sulphuric acid can be introduced into the system as such or as a part of a phosphoric acid "recycle" (as from the filtrate from filtering to separate the hemihydrate).

In order to maintain the desired soluble sulphate concentration in the first reaction vessel and in the second reaction vessel, circulation between the two reaction vessels is initiated. A first portion of the first slurry from the first reaction vessel is circulated through a first conduit into the second reaction vessel, and a first portion of the second slurry from the second reaction vessel is circulated through a

**0 003 266**

second conduit into the first reaction vessel. This circulation is continuous. In order to better disperse the added phosphate rock and the added sulphuric acid within the slurry of the first and the second reaction vessels respectively and to better disperse the incoming slurry with the slurry present in the given reaction vessel, a second portion of the first slurry and a second portion of the second slurry is circulated within the first and second reaction vessels, respectively, preferably each through its own draft tube and preferably at a rate equal to at least 50% of the volume of the slurry in a given reaction vessel per minute. This inter-and intra-vessel circulation disperses the reactants within the slurry in the respective reaction vessels. A third portion of the second slurry is removed from the reaction system so as to separate the liquid and solid components from the said slurry.

Especially preferred is the use of an additional vessel as a slurry tank, into which phosphoric acid (which can be a filtrate, usually containing in the range of 0.5—3.5% sulphuric acid) and phosphate rock are contacted to form a slurry which is transported (as by an overflow pipe) to the dissolver vessel. In such a slurry tank, as in the dissolver, it is frequently useful to use venting and/or to add a defoaming agent. A preferred defoaming agent comprises tall oil, tall oil fatty acids, or lower alkyl esters of tall oil fatty acids, or mixtures of such tall oil acids and esters, because such tall oil additives can also function (alone or with added sulphonics) as a crystal modifiers. The preferred esters are the methyl and ethyl (as exemplified by the esters found in the commercial product marketed under the tradename AZ—10—A).

One of the problems encountered in the practice of such a process, and in many like processes in which a particulate solid has to be maintained in intimate contact with a liquid for an extended period of time, is that of maintaining solid particles dispersed or in suspension in the liquid, especially during periods (such as at startup or during and following a shutdown) when circulation and/or stirring of the reaction mass is ineffective or of reduced effectiveness to prevent settlement of solid particles. One aspect of the present invention is directed to this problem and its solution in a simple and practical way.

Thus in one aspect the invention provides apparatus for reacting or dissolving a particulate solid and a liquid, comprising a vessel, a draft tube mounted in an upright position within the vessel, a mechanical agitator positioned within the draft tube, and an inlet for introducing a feed slurry into the vessel, characterised by a further agitator comprising means for injecting a pressurised fluid to a bottom portion of the vessel to prevent appreciable settling of solids, or to resuspend settled solids following a shutdown.

Preferably the pressurised fluid is a gaseous fluid, especially air.

The further agitator may be arranged to supply fluid beneath a lower portion of the draft tube, and preferably the draft tube has an outwardly flared lower skirt portion terminating in said bottom portion of the vessel. Moreover, the lower end wall of the vessel is preferably downwardly dished to cooperate with the skirt portion of the draft tube in promoting favourable fluid flows induced in the bottom portion of the vessel by the supply of fluid thereto, for suspension of solid particles in the liquid in the vessel.

Preferably said inlet comprises a conduit the lower end of which terminates within the draft tube.

The vessel is preferably closed.

In order to reduce foaming caused by reaction within the vessel, the inlet preferably includes vent means and in a preferred arrangement the inlet comprises a conduit having an elongate portion extending downwardly within said vessel, an upper vent portion disposed externally of the vessel and an inlet portion connected to said upper portion and through which slurry is fed.

Desirably said elongate portion and said upper vent portion of the conduit both extend substantially vertically, said inlet portion being connected at an angle to said upper portion.

The apparatus may include an overflow pipe extending from an upper portion of said vessel, and a recycle slurry pipe extending into said vessel and terminating between the outer wall of said draft tube and the inner wall of said vessel, adjacent the lower end portion of said draft tube.

Another problem that arises in many solid/liquid contact processes is that of foaming of the mass in a vessel in which the contact takes place. This problem is especially prevalent in wet processes for phosphoric acid manufacture. Thus the invention may further provide an inlet for introducing a treating or defoaming agent into said vessel. The vessel may comprise a first vessel in a multi vessel apparatus for the preparation of phosphoric acid by the wet process and in which slurry is continuously circulated between and within said vessels.

In another aspect the invention provides apparatus for the preparation of phosphoric acid from phosphate rock and sulphuric acid, comprising first and second reaction vessels, each of the vessels having a mechanical agitator positioned within a respective upright draft tube mounted within each respective vessel, characterised by an inlet for introducing reactants comprising phosphate rock and phosphoric acid to the first reaction vessel, means for introducing sulphuric acid into the second reaction vessel, means for maintaining continuous circulation of slurry between the first and second reaction vessels and means for withdrawing a slurry containing phosphoric acid and calcium sulphate from the second reaction vessel, and by a further agitator for injecting fluid under pressure to a bottom portion of the first reaction vessel to prevent appreciable settling of solids or to resuspend solids following a shutdown.

Preferably the mechanical agitators are arranged to continuously circulate slurry within each of the vessels so that the slurry flows from a bottom portion of the respective draft tube, up through the

3

draft tube and downwardly in the space between said draft tube and the adjacent inner wall of the vessel.

The inlet for reactants preferably includes vent means for permitting escape of gases from the first reaction vessel and for reducing foaming generated by reaction in the first reaction vessel.

There may be means for applying a vacuum to the second reaction vessel to permit control of temperature in the second reaction vessel and to permit the formation of a vacuum seal between the first and second reaction vessels.

The apparatus may include a third reslurry vessel for reslurrying phosphate rock and recycle phosphoric acid, and means interconnecting the third vessel with the inlet to the first reaction vessel.

Conveniently, said first vessel is a dissolver vessel for dissolving phosphate rock in said first slurry, said second reaction vessel being cooled by evaporation and functioning as a crystallizer vessel for crystallizing calcium sulphate in said second slurry, and the apparatus includes a fourth filter feed vessel, means for conducting slurry withdrawn from said second reaction vessel to said fourth vessel, and an agitator in said fourth filter feed vessel for maintaining the slurry therein in suspension.

Preferably the means for conducting slurry withdrawn from the second reaction vessel to the fourth vessel comprises a surge tank.

The apparatus may further include means for conducting slurry from the fourth filter feed vessel to filter means arranged to filter crystalline calcium sulphate from the slurry, and means for conducting filtrate containing phosphoric acid from the filter means to the third vessel.

Other features of preferred embodiments of apparatus embodying the invention will appear hereinafter.

The invention also provides a process for the preparation of phosphoric acid from phosphate rock and sulphuric acid, comprising adding phosphate rock and phosphoric acid to a first reaction vessel containing a first slurry comprising calcium sulphate, monocalcium phosphate and phosphoric acid, whereby the added phosphate rock is substantially converted to monocalcium phosphate, calcium sulphate and phosphoric acid, continually circulating the first slurry within the first reaction vessel by means of a mechanical agitator disposed within a draft tube, adding sulphuric acid to react with the monocalcium phosphate to form calcium sulphate and phosphoric acid, and separating at least a portion of the product so formed into a liquid component comprising phosphoric acid and a solid component comprising calcium sulphate, characterised in that the first slurry in the first vessel is further agitated by supply of fluid under pressure to a bottom portion of the first vessel to prevent appreciable settling of solids or to resuspend settled solids following a shutdown, in that a portion of the first slurry from the first vessel is continually transferred from the first vessel to a second reaction vessel containing a second slurry comprising calcium sulphate, monocalcium phosphate, sulphuric acid and phosphoric acid, in that the sulphuric acid is added to the second vessel and continuous circulation is maintained of the second slurry within the second vessel, and in that a portion of the slurry in the second vessel is continually transferred from the second vessel to the first vessel.

Another problem encountered in the operation of wet process plant for the production of phosphoric acid is that of starting up the process in a controlled and effective manner that avoids the production of unwanted by-products and their deleterious effect upon the continuous operation of the plant. This problem is especially troublesome in multi-vessel systems to which the above discussed aspects of the invention are particularly applicable.

Thus the process preferably includes the initial steps of substantially filling at least the first and second vessels with phosphoric acid at a temperature in the range of 165 to 215°F (74 to 102°C) and having a $P_2O_5$ analysis in the range of about 28 to about 38% by weight, circulating a portion of the acid from the first vessel to the second vessel, feeding phosphate rock to a third vessel that communicates with the first reaction vessel, cycling fluid from the first and second vessels to a fourth vessel as the volume of the fluid increases by reaction and foam formation, recycling the fluid from the fourth vessel to the third vessel; adding sulphuric acid to the second vessel to cause precipitation of calcium sulphate whereby the phosphoric acid strength in the second vessel is increased to within the range about 36% to about 42% $P_2O_5$ by weight and the solids components of the contents of the second vessel is in the range of about 25% to 35%, transporting the contents containing in the range of 25% to 35% solids from the second vessel to a separation section where phosphoric acid is separated from the calcium sulphate, and recycling a portion of the separated phosphoric acid to the third vessel.

Preferably the phosphoric acid is heated by substantially filling the first, second and third vessels with phosphoric acid at a temperature below about 165°F (74°C) and a $P_2O_5$ content greater than about 38% by weight and then introducing sufficient steam into at least one said vessel to cause the phosphoric acid to reach a temperature in the range of 165 to 215°F (74 to 102°C) and, by dilution from the condensed steam, a $P_2O_5$ analysis of at least 28% by weight.

The soluble sulphate content of the slurry in the first vessel may be controlled by regulation of the addition of sulphuric acid to the second vessel and/or the rate of addition of phosphate rock to the third vessel and/or the recycling of slurry between the second and first vessels.

Preferably the temperature of the slurry is allowed to increase by the effect of heat generated by the reaction of sulphuric acid with monocalcium phosphate to a temperature in the range about 200 to 215°F (93 to 102°C), and then the temperature in the second vessel is maintained in the range about 202 to 210°F (94 to 99°C) by applying a vacuum to the second vessel.

Prior to the addition of phosphate rock to the third vessel, sufficient phosphoric acid may be added to the fourth vessel to permit a pump to operate.

Further features of preferred embodiments of this process, that accomplishes controlled startup and transition to continuous operation of a multi-vessel system, are, described hereinafter, in the following description of certain embodiments.

Preferred embodiments of the invention will now be described, by way of example, with reference to the accompanying drawings in which:

Figure 1 is a schematic perspective view of one preferred embodiment of apparatus for the preparation of phosphoric acid by the wet process;

Figure 2 is a schematic sectional view of an alternative embodiment of apparatus for the preparation of phosphoric acid by the wet process;

Figure 3 is a schematic sectional view of the apparatus of Figure 1 with certain components omitted in the interest of clarity;

Figure 4 is a vertical section of a vessel of the apparatus of Figures 1 and 3; and

Figure 5 is a schematic sectional view of a further embodiment of apparatus for the preparation of phosphoric acid by the wet process and incorporating two dissolver vessels in series.

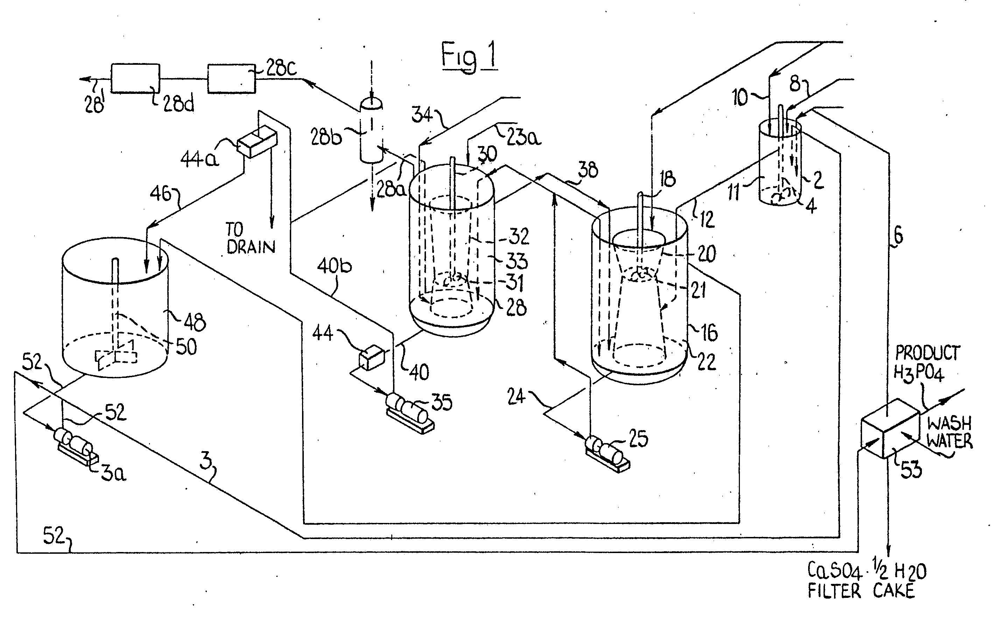

Referring to the drawing, the apparatus for the preparation of phosphoric acid illustrated in Figures 1, 3 and 4 comprises a vessel 2 having an agitator 4, phosphoric acid at about 70°C being fed to the vessel 2 through conduit 6 and phosphate rock, either calcined or uncalcined, being fed to the vessel through conduit 8. Either ground or unground phosphate rock can be used. For example, phosphate rock of 90% of $-200$ U.S. Standard mesh can be used, but the preferred rock is about 95% of $+100$ U.S. Standard mesh, containing at least 32% $P_2O_5$. Rock containing less than 32% $P_2O_5$ is acceptable, and can be employed in this process. High alumina phosphate pebble may also be used.

For the hemihydrate process, the phosphate rock is slurried in phosphoric acid that preferably contains from about 20% to about 40% $P_2O_5$. Phosphoric acid, recycled from the separation section, to be discussed later, and containing from about 20% to about 40% $P_2O_5$ (and usually some sulphuric acid) is usually used in the process. When the phosphoric acid is recycled from the separation section it will usually contain from about 0.5% to about 3.5% sulphuric acid by weight. Phosphoric acid from other sources, such as other phosphate plants, merchant grade acid may also be used.

The temperature of the resultant slurry 11 so formed in the vessel 2 is about 92°C and the solids content is from about 30% to about 40% by weight.

Defoamer can be added to vessel 2 as needed through conduit 10 that is preferably of much greater height and/or diameter than is required for introduction of the defoamer and can thus additionally function as a vent, greatly reducing foaming in the slurry and, in some cases, possibly eliminating the need for the use of a defoamer in vessel 2. Suitable defoamers include tall oil, tall oil fatty acids, alkyl esters and part esters of tall oil fatty acids (especially methyl and ethyl esters), sulphated tall oil fatty acids, tall oil rosin, alkoxide adducted tall oil rosin, oleic acid, sulphated oleic acid, silicones, reaction products of amines and carboxylic acids and mixtures of two or more of such defoamers. One preferred defoamer is the mixture of methyl esters of tall oil fatty acid and tall oil fatty acids known by the trade name "AZ 10A", this product also functioning as a crystal modifier.

The amount of the defoamer used is preferably from about 0.01% to about 0.3% (typically 0.04 to 0.1) by weight based on the weight of the slurry transferred to the separation section (or about 0.05% to 1.5% based on $P_2O_5$ produced by the process).

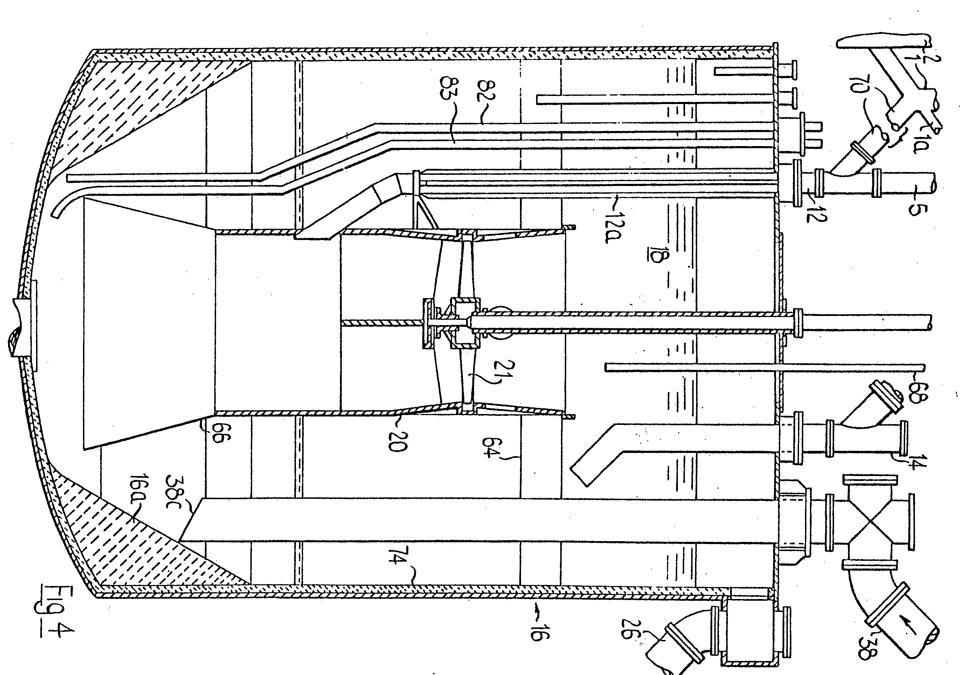

Slurry 11 is transferred through a conduit 12 to a first reaction vessel, or dissolver, 16. Vessel 16 is fitted with an agitator comprising a shaft 18 and a propeller 21 attached to the bottom thereof, and a draft tube 20 which is secured to the inside wall of vessel 16 by braces 64 (Figure 4). The vessel 16 contains a first slurry 22 which is composed of calcium sulphate, monocalcium phosphate, phosphoric acid, and sulphuric acid. The propeller 21 of the agitator is so positioned with respect to the location of the draft tube 20 that on actuation of the shaft 18 and propeller 21 by a motor (not shown), slurry 22 in vessel 16 will flow from the bottom portion of the draft tube 20 up through the draft tube. On exiting the top of the draft tube, slurry 22 will flow downwardly in the space between the draft tube 20 and the inside walls of vessel 16. Alternatively, the propeller blade can be positioned closer to the bottom of the draft tube and, if desired, the flow can be reversed (i.e., to flow upwardly in the space between the draft tube and the inside walls).

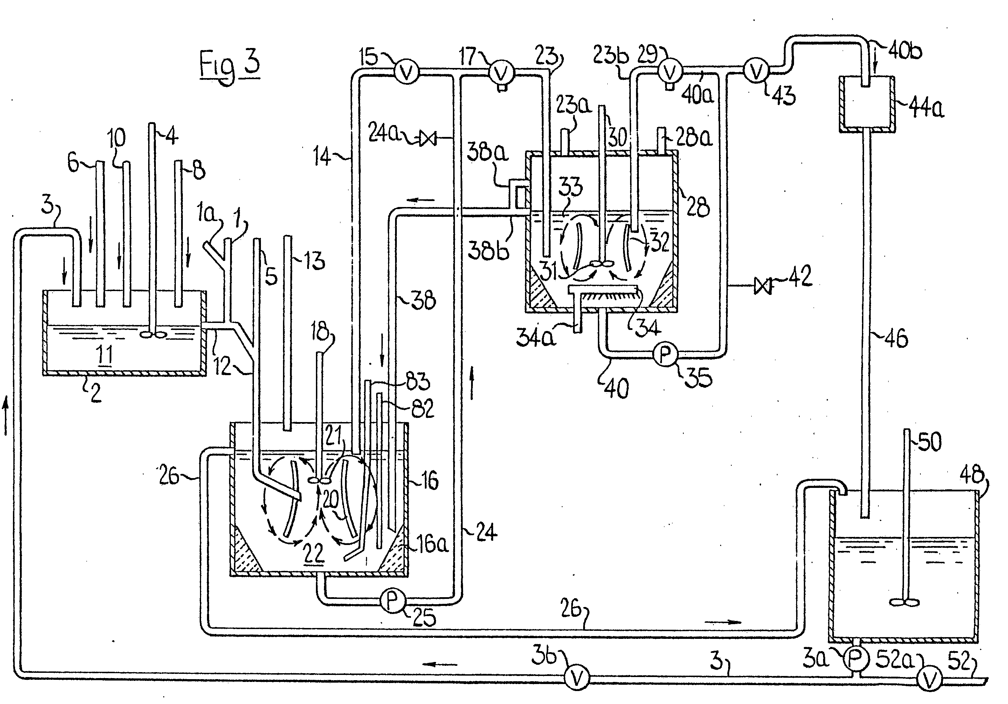

A body of slurry 33 is maintained in a second reaction vessel or crystallizer, 28. A first portion of the slurry 33 is continually withdrawn and transferred to the vessel 16 through a second, overflow conduit 38 having upper and lower connections 38a, 38b to the vessel 28, while a portion of the slurry 22 in the vessel 16 is continually withdrawn and transferred to the vessel 28 through conduits 23 (Figure 3) and 24. In the arrangement depicted, the vessel 28 is vertically offset above the vessel 16 and pump 25 is used to transfer slurry from vessel 16. However, the vessels 16 and 28 may be on the same level. Samples for analysis of the first slurry are removed from samples ports 24a in conduit 24.

Slurry 22 is maintained at a suitable temperature and soluble sulphate value selected according to the desired form of the calcium sulphate product, a temperature ranging from about 66°C to about 113°C and a soluble sulphate value ranging from about +0.7 to about –4% (preferably below about 0.0%) being suitable for formation of hemihydrate.

The vessel 28 is equipped with an agitator comprising shaft 30 and propeller 31, a draft tube 32 and a sulphuric acid inlet sparger 34 with inlet 34a (Figure 3). Draft tube 32 is secured to the inside wall of vessel 28 by braces (not shown). Sulphuric acid, conveniently from about 89% to 99% $H_2SO_4$, and typically about 98% $H_2SO_4$, is added from the sulphuric acid inlet 34 to be thoroughly dispersed into slurry 33, along with the slurry from conduit 24. A crystal modifier, usually a derivative of a tall oil or of an organic sulphonic acid, preferably a salt, may be added to vessel 28 through another inlet 23a. The crystal modifier can also be added to the first reaction vessel. A preferred crystal modifier is selected from alkyl, aryl, alkylaryl, and alicyclic derivatives of sulphonic and sulphuric acids in which the organic radical contains from about 12 to about 30 carbon atoms. The free acid, salts thereof and mixtures of the free acid and salts may be used. The preferred salts include those of alkali metals, ammonia and alkyl, aryl or alkylaryl amines (e.g. trimethyl amine, diethyl amine, monopropyl amine). Polymeric sulphonates and sulphates can also be employed. Examples of crystal modifiers which can be employed in the present process are alkyl sulphonic acids containing from about 12 to about 30 carbon atoms, benzenesulphonic acid, alkylbenzenesulphonic acid in which the alkyl group contains from about 8 to 20 carbon atoms, alkylcyclohexane sulphonic acid in which the alkyl group contains from about 8 to 20 carbon atoms, polymeric sulphonates and sulphates such as polystyrene sulphonate, and polyvinylsulphonate, said polymeric material having a molecular weight of from about 500 to about 1,000,000. The organic sulphonic acid can be an alkyl-, aryl-, or an alkylaryl-sulphonic acid or a sulphated derivative of a carboxylic acid or an alkali metal, amine or ammonium salt thereof.

For example, tetradecylsulphonic acid, benzenesulphonic acid isooctylbenzene sulphonic acid and sulphated oleic acid may be used as crystal modifiers in this process. Mixtures of two or more modifiers are also useful. The crystal modifier is added for the purpose of increasing the growth of the calcium sulphate, e.g. hemihydrate, crystals formed in the system. The preferred salts include those of sodium, potassium, ammonia and primary, secondary and tertiary alkyl amines containing from 1 to about 30 carbon atoms. Preferably, the modifier as described above, is present at a level of about 1 to 1000 ppm (usually 5 to 500 ppm) based on the weight of slurry to the separation section. Preferably, the levels of modifier and of defoamer are kept as low as possible (while maintaining good filterability).

Phosphoric acid, if needed, can be also added to the second slurry within the second reaction vessel.

Activation of the agitator by means of a motor (not shown) causes a flow of slurry 33 from the bottom of the draft tube 32 up through the draft tube and out the top portion of said draft tube. On exiting the top of the draft tube 32, the slurry flows downwardly in the space between the draft tube 32 and the inside walls of vessel 28. The circulation thus established within vessel 28 not only disperses slurry 22 and sulphuric acid in slurry 33, but also constantly renews the surface of the slurry 33.

Vessel 28 is connected to a vacuum pump 28' (Figure 1) and is subjected to a subatmospheric pressure ranging from about 2 inches (50 mm) of mercury to about 29 inches (740 mm) of mercury absolute, so that water is evaporated from the hot slurry, thus cooling the slurry and also forming a vacuum seal between the first and second reaction vessels. In addition to water, other volatile materials produced by the reaction of sulphuric acid and phosphate rock are also removed. These materials include HF, $SiF_4$, $H_2S$, $SO_2$, $CO_2$.

Because of the internal circulation of the slurry within vessel 28 temperature gradients are minimised, the slurry 33 being maintained at a suitable temperature, e.g. ranging from about 66°C to about 113°C, preferably from about 80°C to about 105°C, for the hemihydrate process and having a suitable sulphate content, e.g. ranging from about +0.7 to about +4.5% for the hemihydrate process.

The portion of slurry 33 that is returned to vessel 16 through conduit 38 is efficiently dispersed within slurry 22 in vessel 16 by the internal circulation within vessel 16. Thus both inter-vessel and intra-vessel circulation occur so as to better disperse the reactants being added to the slurries and to reduce temperature gradients within the vessels due to heating and cooling. This circulation system permits rapid and easy plant control and the negative sulphate level in the dissolver acts like a buffer to absorb inadvertent sulphate concentration increases in the crystallizer.

The rate at which said slurry is circulated within the first and second reaction vessels is preferably at least equal about 50% of the volume of the slurry in the first reaction vessel per minute, preferably from about 50% to about 150% and most preferably about 100%. This circulation thoroughly disperses the phosphate rock-phosphoric acid mixture within the slurries.

The residence time of the solids in the first reaction vessel is from about 2.0 hours to about 5.0 hours preferably from about 2.5 hours to about 4.5 hours. Residence time of the solids in the second reaction vessel is from about 0.6 hours to about 2.0 hours, preferably from about 0.7 hours to about 1.6 hours.

A portion of slurry 33 about equal to the amount of reactants added (phosphoric acid, phosphate rock and sulphuric acid), minus the amount of water and volatiles removed from the system is removed from vessel 28 through conduit 40. Samples for analysis of the second slurry are removed from sample port 42 located on conduit 40. The slurry is pumped by a pump 35 from a rock box 44 (Figure 1) and, via a line 40b, to a diversion or splitter box 44a from which it flows to a fourth, filter feed, vessel 48 through conduit 46, agitator 50 maintaining the slurry in a dispersed condition in vessel 48.

The splitter box 44a is a device arranged to provide a sufficient liquid head to provide a vacuum seal and a break in the line to prevent siphoning, and comprises a compartmented vessel, usually containing a wire-like partition (that can be fixed or movable), and with an entry line that can be moved to the top of either compartment (for slurry from the crystallizer) and an exit line at the bottom of each compartment, one exit line being for conducting slurry to the filter feed vessel 48 and the other leading to a drain and being used for cleaning the line and the splitter box. Further, the rock box 44 is arranged to trap any relatively large objects, such as rocks, stones and hard pebble-like masses which apparently form upon and break off the sulphuric acid sparger in the crystallizer. The rock box also includes washing means (not shown), e.g. a water line, and discharge means (not shown), e.g. a drain, for removing entrapped particles during a shut down period.

The slurry is pumped by a pump 3a from vessel 48 through conduit 52 to a separation section (not shown in Figure 3 but shown in Figure 1). In start-up, valve 52a can be closed and valve 3b opened to direct the slurry through line 3 to vessel 2, and, thus, bypass the separation section and provide a fast means of building up the solid level in the slurry without dumping wet pans.

Referring to Figure 1, the separation section comprises a filter 53 to which slurry containing crystalline calcium sulphate and phosphoric acid is conducted via conduit 52 from the filter feed vessel 48. The filter 53 is arranged to filter crystalline calcium sulphate from the slurry, a portion of the filtrate comprising phosphoric acid being recycled to said vessel 2 via conduit 6.

Still referring to Figure 1, it will be noted that line 28a leading from vessel 28 to vacuum pump 28' includes a number of components not shown in Figure 3. In particular, line 28a includes a condenser 28b arranged to condense steam and fluorine compounds, a scrubber 28c arranged to protect the vacuum pump from damage by fluorine compounds, and an entrainment separator or disengager 28d arranged to prevent nongaseous matter, mostly droplets containing fluorides, from entering the vacuum pump.

In normal operation, reactants are continuously added to vessels 16 and 28, while water, volatiles and product slurry are constantly withdrawn from vessel 28. However, in case of a separation apparatus breakdown, for instance, the system can be placed in a recycle condition, no reactants being added to the system, intra-vessel circulation being continued while inter-vessel circulation is discontinued.

It is to be recognised that the elevation of vessels 2, 16, 28, 44 and 48 with respect to each other may be varied without affecting the operation, while the conduits connecting vessels 2, 16, 28, 44 and 48 may be rearranged to meet requirements. For example, slurry 22 passing from vessel 16 to vessel 28 may be introduced into the top part of vessel 28 rather than the bottom part without affecting the process. Further, as indicated in Figure 3, the vessel 16 may be positioned at a higher elevation than the filter feed vessel 48 and include an overflow pipe 26 from the vessel 16 to the vessel 48 for conducting overflow slurry from the vessel 16 by gravity to the vessel 48.

The apparatus conveniently includes a first recirculation conduit 14 connected to conduit 24 for selectively recirculating said first slurry from said vessel 16 externally thereof and back to said vessel by means of the pump 25; a second recirculation conduit 40a and 23b connected to conduit 40 for selectively recirculating said second slurry from said vessel 28 externally thereof and back to said vessel 28, by means of the pump 35; valves 15 and 17 for controlling slurry flow via the conduit 24 from said vessel 16 to the vessel 28 and to said first recirculation conduit 14; and valves 29 and 43 to control the flow of slurry via the conduit 40 to the splitter box 44a and said second recirculation conduit.

Referring now particular to Figure 4, the construction of the vessel 16 of the embodiments of Figures 1 and 3 will be described in more detail. The illustrated vessel 16 is of closed construction, the draft tube 20 being mounted within the vessel in a vertical position by means of a series of braces 64 extending between the inner wall 74 of the vessel 16 and the outer wall of the draft tube 20. The draft tube 20 includes an outwardly flared lower skirt portion 66 terminating in the bottom portion of the vessel 16, the inner wall 74 of the vessel adjacent the lower end thereof being downwardly dished, as shown at 16a, adjacent the lower end of the skirt portion 66 of the draft tube 20, the vessel including an outlet in the lower end thereof beneath the draft tube. It will be noted that inlet conduit 12 for introducing a feed slurry to the vessel 16 from vessel 2 includes a substantially vertical lower end portion 12a within the vessel 16, passing through the wall of the draft tube 20 and terminating therewithin the inlet conduit further including a substantially vertical upper end vent portion 5 extending outside and above the vessel 16 to permit escape of gases and thus to reduce foaming generated by reaction in the vessel 16 and having a slurry inlet portion 70 connected at an angle to said portion 5 and leading to said vessel 2 and also leading to vent conduits 1 and 1a, conduit 1a conveniently being used for introducing a treating or defoaming agent into said vent pipe 1.

In the illustrated apparatus, the agitator 21 is positioned in the upper portion of said draft tube 20, alternatively, however, the agitator may be positioned in the lower portion thereof or at an intermediate level. The apparatus further includes overflow pipe 26 extending from the upper end portion of said vessel 16, recycle slurry pipe 38 extending into said vessel and terminating at 38c in the annulus between the outer wall of said draft tube and the inner wall 74 of said vessel, adjacent the lower end portion of said draft tube, and an additional inlet pipe 68 in said vessel for the introduction of steam or a treating or defoaming agent.

Further the vessel 16 includes two sets of air spargers 82 and 83 for introducing fluid, e.g. air, under pressure to the bottom portion of the vessel, conveniently to the lower portion of the draft tube skirt 66, to agitate slurry in the vessel 16 to prevent settling of undissolved solids or to suspend solids on start up of the process or following a shut down.

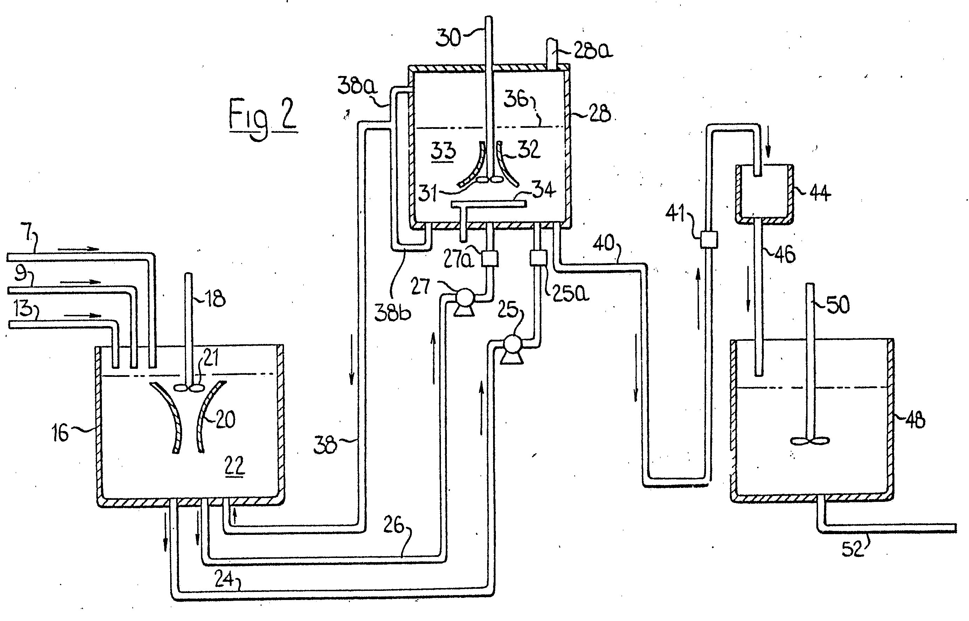

An alternative embodiment is illustrated in Figure 2. In this embodiment, instead of adding the phosphoric acid, phosphate rock and if necessary, the defoamer to a preslurry vessel 2 as shown in the embodiment the Figures 1, 3 and 4, the reactants are added directly to the first slurry 22 in vessel 16. The phosphoric acid is added through conduit 7 and the phosphate rock is added through conduit 9. The reactants are added in amounts such that the direct combination of the two results in a slurry containing about 30% to about 40% solids by weight and an initial concentration of about 13% to about 47% $P_2O_5$ in the liquid portion of the slurry. Defoamer is added through conduit 13, if, and when needed. Once the reactants are dispersed in the first slurry 22, the parameters such as temperatures, pressures, concentrations and flows are the same as described above for the more preferred embodiment of Figures 1, 3 and 4; however a greater number of air spargers may be required (the air spargers are omitted from Figure 2 in the interest of clarity).

Figure 2 also shows the provision of a second conduit 26, with pump 27 for returning slurry from vessel 16 to vessel 28, and valves 25a and 27a for controlling the respective flows through the conduits 24 and 26. Further, Figure 2 shows the positioning of the vessel 28 at an elevation relative to rock box 44 and filter feed vessel 48 such that slurry at a level 36 in the vessel 28 may flow gravitationally through conduit 40 under the control of a valve 41.

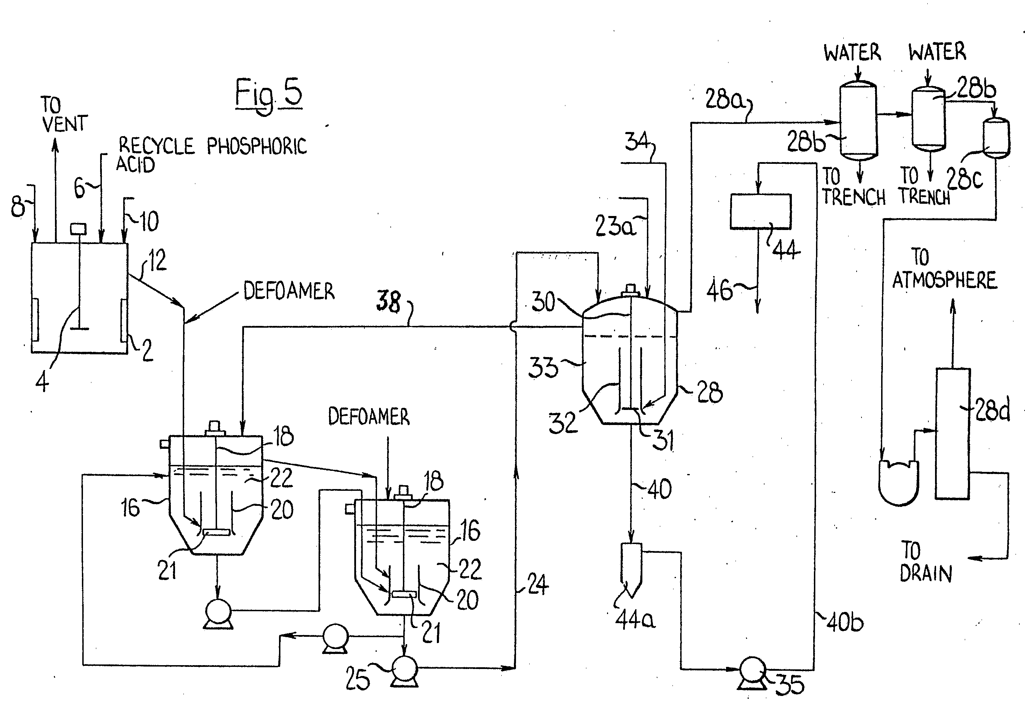

Figure 5 similarly shows an alternative embodiment that resembles that of Figures 1, 3 and 4 very closely, except that this embodiment employs two dissolvers 16 in series and connected by suitable conduits and pumps arranged to provide two way circulation between the dissolvers.

Illustrative examples
Example 1

Vessels 16 and 28 and the accompanying connective means such as conduits, pumps, etc. of the apparatus of Figures 1, 3 and 4 are filled with a slurry consisting of calcium sulphate hemihydrate, monocalcium phosphate, phosphoric acid and sulphuric acid. The weight percent of the solids in the slurry is about 31%, the specific gravity of the degassed slurry in vessel 28 is about 1.80 g/cc. $P_2O_5$ concentration of the liquid portion of the slurry is about 42% by weight. The temperature of the slurry in vessel 16 is between 88 and 105°C preferably between 92°C and 105°C, and the temperature in vessel 28 is between 88° and 105°C, preferably 92°C and 105°C. Soluble sulphate concentration in vessel 16 is from about +0.6 to about −7% (preferably 0.0 to −6) and the soluble sulphate concentration in vessel 28 is above 0.0 (preferably from about 0.7% to about +4.5%).

A mixture of phosphate rock (typical analysis shown in Table 2 and a size distribution shown in Table 3), and phosphoric acid is prepared by adding phosphate rock to phosphoric acid in the ratio of about 1647 pounds (747 kg) of phosphate rock (about 31.2% $P_2O_5$ and 45.6% CaO) to about 3700 pounds (1678 kg) of phosphoric acid (about 32% $P_2O_5$). The temperature of the mixture is about 90°C. A tall oil-sulphonic acid defoaming agent (AZ 10A) is added as needed to reduce the foam caused by partial dissolution of the phosphate rock in phosphoric acid.

This phosphate rock-phosphoric acid mixture is added to the first slurry in vessel 16 at the rate of about 380 U.S. gallons (1438 litres)/minute (about 5350 pounds (2427 kg) per minute). The incoming mixture is thoroughly mixed with the first slurry and a first portion of the second slurry from the second reaction vessel. Intra vessel mixing is accomplished by means of the draft tube and the agitator. The first slurry is pumped from the first reaction vessel 16 to the second reaction vessel 28 at the rate of about 1640 U.S. gallons (6207 litres)/minute. The first slurry is thoroughly mixed with the second slurry and 98% sulphuric acid which is added to the second reaction vessel at about 87 U.S. gallons (329 litres)/minute. An organic sulphic acid derivative can be added to the second reaction vessel 28. This material is added to promote the growth of the hemihydrate crystals. The first slurry, the sulphuric acid and the crystal modifier are thoroughly dispersed into the second slurry in the second reaction vessel 28. The second slurry flows at the rate of about 1280 U.S. gallons (4845 litres)/minute from vessel 28 into vessel 16 where it is thoroughly mixed with the first slurry.

About 45 U.S. gallons (170 litres)/minute of water and volatile materials (HF, $SiF_4$, $H_2S$, $CO_2$, etc.) is vaporized from the second slurry in vessel 28. Vessel 28 is maintained at about 15 inches (380 mm) of mercury absolute. Approximately 400 U.S. gallons (1514 litres)/minute of slurry is withdrawn from the second reaction vessel and flows to vessel 48, the separator feed tank. Thus about 445 U.S. gallons (1684 litres)/minute of material (vaporized material and the slurry to the separator feed tank) is removed from the system. The removed slurry is then passed to the separation section where the solid and liquid portions of the slurry are separated.

At these rates, the plant will produce about 350 tons (318 tonnes) per day of $P_2O_5$ of 35—44% $P_2O_5$ phosphoric acid.

Total loss in filter cake

|  | % of $P_2O_5$ fed in rock |
|---|---|
| Citrate insoluble (CI) | 0.76 |
| Citrate soluble* (CS) | 4.64 |
| Water soluble (WS) | 2.34 |
| Total loss | 7.74 |
| Total recovery | 92.26 |

*Lattice substitution losses determined using ammonium nitrate instead of ammonium citrate solution.

A typical analysis of the phosphoric acid produced by this process is shown in Table 4. The total residence time, from entering vessel 16 to exiting vessel 48, is calculated at 7.9 hours. The volume of vessel 16 is about 120,000 U.S. gallons (455 m³) the volume of vessel 28 is about 40,000 U.S. gallons (152 m³) to normal liquid level.

Phosphate rock is present in the first and in the second slurries in the first and second reaction vessels respectively. The amount present is quite small and will vary considerably. The value for the "Citrate Insoluble" loss of the filter cake is a rough measure of undissolved and unreacted phosphate rock.

The total sulphate value added to the system is the sum of the sulphate values added as sulphuric acid plus the sulphate values entering the system in the rock. Table 1 is a compilation of sulphuric acid usage for five measurement periods.

Examples 2 to 7

The following system as described hereinafter was set up in a pilot plant to duplicate actual plant operation in order to investigate the effect of defoamers and crystal modifiers on the filterability, and hence the crystal size, of the calcium sulphate hemihydrate produced.

Into a first reaction vessel containing reaction slurry was added phosphate rock, recycled phosphoric acid and recycle reaction slurry from the second reaction vessel. Defoamer, when used, was added in the first reaction vessel. The reaction slurry so formed in the first reaction vessel was circulated to the second reaction vessel. Sulphuric acid and crystal modifiers were added to the second reaction slurry. The second reaction vessel was maintained under slight vacuum so as to remove gaseous impurities and water from the slurry. The evaporation of water was utilised to cool the reaction slurry.

The conditions employed in determining the utility of the crystal modifier and the defoamer in early runs and later runs are shown below in Table 5. Results of the tests from the later runs are shown in Table 6.

Phosphate rock is present in the first and in the second slurries in the first and second reaction vessels respectively. The amount present is quite small and will vary considerably. The value for the "Citrate Insoluble" loss of the filter cake is a rough measure of undissolved and unreacted phosphate rock.

Example 8

A hemihydrate system substantially as shown in Figures 1, 3 and 4 and operated substantially as described in Example 1 was discovered to be wasteful of product acid on start-up, that is, the first one or two days of production could not be economically filtered due to fine particles in the feed to the filter and had to be "dumped wet" with a resulting high loss of $P_2O_5$ values.

In a modified start-up procedure, the system was first filled with water heated by steam to 210°F (99°C). This preheated the vessels while testing the equipment at temperature. The system was drained of water and filled through the evaporators with 185°F (85°C) 31% $P_2O_5$ acid. After the crystallizer and dissolver were filled with acid, phosphate rock was then fed to the system. The fluid was recycled from the filter feed tank to the reslurry tank until the solids were builtup to about 30%. The sulfates were adjusted continuously to the proper level by adding sulfuric acid to the crystallizer (e.g. negative in the dissolver and positive in the crystallizer). After the solids were at the proper level, slurry was then sent to the filter. The plant was started up at 150 tons (136 tonnes) day feed rate. The filter was lined out within two hours of startup (i.e. no wet pans after two hours). Within 48 hours the design rate of 350 tons (318 tonnes) day was achieved with no apparent problems. Product acid strength was up to 40% $P_2O_5$ within one shift. The recycling of the acid slurry allowed all the precipitate to convert to hemihydrate from dihydrate that was formed at the beginning of the startup. This allowed a more filterable precipitate to be formed.

After the completion of a 44 day plant test and several modifications to the dissolver, the plant was again started up. Essentially the same startup procedure was used except the system was not preheated with hot water and 35% acid @ 185°F (85°C) was used in the charging of the system. The startup went very smoothly with no particular problems, although the filling of the system was slowed by evaporator problems. The first hemihydrate cake that was produced filtered well. No filter pans were dumped wet during startup.

Upon completion of the plant trial runs in this Example 8, the average parameters in Table 7 were calculated from data gathered over the entire course of the runs.

TABLE 1

| Rock fed, TPD | CaO in Rock, % | $SO_4$ in Rock % | CaO Fed, TPD | Stoichiometric sulphate ($SO_4^=$) for CaO in rock TPD | Sulphate present in 100% $H_2SO_4$ fed to unit TPD | Sulphate equivalent in rock, TPD | Total sulphate used, TPD | Total $SO_4^=$ used as a fraction of stoichiometric amount |
|---|---|---|---|---|---|---|---|---|
| 1209.5 | 44.90 | 0.65 | 543.07 | 930.97 | 844.4 | 7.86 | 852.26 | 0.915 |
| 1383.1 | 45.97 | 0.65 | 635.81 | 1089.4 | 1052.2 | 8.99 | 1061.2 | 0.974 |
| 1381.6 | 46.76 | 0.65 | 646.04 | 1107.5 | 1024.7 | 8.98 | 1033.7 | 0.933 |
| 1172.2 | 46.81 | 0.65 | 548.71 | 940.64 | 844.3 | 7.62 | 851.9 | 0.906 |
| 1110.9 | 46.89 | 0.65 | 520.90 | 892.97 | 804.6 | 7.22 | 811.82 | 0.909 |

### TABLE 2
Typical phosphate rock analysis

| Compound | For example 1 % by weight | For example 8 % by weight |
|---|---|---|
| $P_2O_5$ | 31.2 | 32.15 |
| CaO | 45.6 | 46.81 |
| $Fe_2O_3$ | 1.4 | 0.79 |
| $Al_2O_3$ | 1.2 | 1.12 |
| MgO | 0.4 | 0.37 |
| $SiO_2$ | 8.7 | 4.6 |
| F | 3.7 | 3.59 |
| $SO_3$ | 0.9 | |
| $CO_2$ | 3.6 | |
| Organic | 1.8 | |
| $H_2O$ | 1.1 | 2.08 |
| $Na_2O, K_2O$ | 0.4 | |
| $SO_4$ | | 0.79 |

### TABLE 3
Typical phosphate rock screen analysis

| Mesh U.S. standard | Cumulative percent |
|---|---|
| +14 | 0.4 |
| +24 | 2.6 |
| +28 | 9.3 |
| +35 | 26.6 |
| +48 | 64.1 |
| +65 | 86.4 |
| +100 | 97.7 |
| −100 | 2.3 |

### TABLE 4
Typical phosphoric acid analysis (weight percent)

| | Example 1 | Example 8 |
|---|---|---|
| $P_2O_5$ | 37.95 | 41.77 |
| $SO_4^=$ | 1.72 | 2.41 |
| CaO | 1.04 | 0.23 |
| $F^-$ | 1.27 | 1.22 |
| MgO | 0.46 | 0.51 |
| $Fe_2O_3$ | 0.97 | 0.97 |
| $Al_2O_3$ | 0.91 | 0.84 |
| Solids | | 0.78 |
| Sp. Gr. | | 1.517 |

## TABLE 5
### General reaction conditions (pilot plant)

| | Early runs | Later runs |
|---|---|---|
| Slurry density | 1.72 g/cc | 1.72 |
| Sulphate concentration* | | |
| First reaction vessel | −2% | −2 |
| Second reaction vessel | +2% | +2 |
| Phosphate rock feed rate | 174 U.S. gallons (6584 litres)/min. | 174 |
| Slurry recycle from second to first reaction vessel | 2200 U.S. gallons (8325 litres)/min. | 2200 |
| Recycle phosphoric acid feed rate to first reaction vessel | 390 U.S. gallons (1475 litres)/min. | 390 |
| Sulphuric acid (93%) feed rate to second reaction vessel | 150 U.S. gallons (567 litres)/min. | 150 |
| Defoamer feed rate to first reaction vessel | 0.7—1.1 U.S. gallons (2.6—4.1 litres)/min. | 0.25—0.76 U.S. gallons (0.9—2.8 litres)/min. |
| Crystal modifier (CM) feed rate to second reaction vessel (1% soln of CM in water) | 0.1—0.4 U.S. gallons (0.4—1.5 litres)/min. | 0.006—0.76 U.S. gallons (0.02—2.8 litres)/min. |
| Temperature of slurry in both reaction vessels | 195—205°F (90—96°C) | |
| 50% Mass dominant crystal size | 30—40 | 26.43 |

*By titration method

## TABLE 6

| Example | Defoamer type | Amount wt.% | Crystal modifier | | Filter rate** TON $P_2O_5$ ft²-day | Calcium sulphate hemihydrate 50% mass dominant crystal size (microns) |
|---|---|---|---|---|---|---|
| | | | Type | Amount ppm* | | |
| 1 | None | None | None | None | 0.35 to 0.42 | 42.8 |
| 2 | None | None | None | None | 0.70 | 39.1 |
| 3 | None | None | Actrasol W—40 | 0.1 | 0.85 | 42.8 |
| 4 | AZ10A | 0.071 | Actrasol W—40 | 10.8 | 1.24 | — |
| 5 | AZ10A | 0.12 | Actrasol W—40 | 12.3 | 1.72 | — |
| 6 | AZ10A | 0.058 | None | None | 0.80 | 35 |
| 7 | AZ10A | 0.061 | Actrasol W—40 | 12.2 | 0.70 | 35 |
| 8 | AZ10A | 0.037 | Actrasol W—40 | 10.0 | 0.45 | 26 |

Actrasol W—40—primarily sodium dodecylsulphonate, Arthur C. Trask Corp. III. 60501
AZ10A—Tall oil fatty acids and esters*, AZ Products Co., P. O. Box 67, Eaton Park, Florida 33840
*AZ Defoamer 10—A is a proprietary blend of tall oil fatty acid and a variety of surfactants.
*Based on weight of slurry
**15 in Hg, 1—1/4″ coke thickness, wash to dry solids 1.02, 33% solids in slurry, 40 to 44% $P_2O_5$

TABLE 7

| | Run average |
|---|---|
| Temperature in dissolver —°C | 94—98 |
| Amount $SO_4$ added stoichiometric $H_2SO_4$* | 0.96—0.97 |
| % $P_2O_5$ in product from crystallizer | 44 |
| Temperature in crystallizer —°C | 98—101 |
| $\dfrac{\text{Reactor volume first stage}}{\text{Reactor volume second stage}}$ | 2.87** |

*Amount $H_2SO_4$ required to convert Ca in feed to dissolver to calcium sulphate including $SO_4$ in rock

**Claims**

1. Apparatus for reacting or dissolving a particulate solid and a liquid, comprising a vessel, a draft tube mounted in an upright position within the vessel, a mechanical agitator positioned within the draft tube, and an inlet for introducing a feed slurry into the vessel, characterised by a further agitator comprising means for injecting a pressurised fluid to a bottom portion of the vessel to prevent appreciable settling of solids, or to resuspend settled solids following a shutdown.

2. Apparatus according to claim 1, further characterised in that the pressurised fluid is a gaseous fluid.

3. Apparatus according to claim 1 or claim 2, further characterised in that the further agitator is arranged to supply fluid beneath a lower portion of the draft tube.

4. Apparatus according to any one of claims 1 to 3, further characterised in that said draft tube has an outwardly flared lower skirt portion terminating in the bottom portion of vessel.

5. Apparatus according to claim 3 or 4, further characterised in that the lower end wall of the vessel is downwardly dished adjacent to the lower end of the draft tube.

6. Apparatus according to any one of claims 1 to 5, further characterised in that the inlet comprises a conduit the lower end of which terminates within the draft tube.

7. Apparatus according to any one of the preceding claims, further characterised in that the inlet includes vent means to reduce foaming generated by reaction in the vessel and to prevent blockage of the inlet.

8. Apparatus according to any one of the preceding claims, further characterised in that the inlet comprises a conduit having an elongate portion extending downwardly within the vessel, an upper vent portion disposed externally of the vessel and an inlet portion connected to the upper portion and through which slurry is fed.

9. Apparatus according to claim 8, further characterised in that the elongate portion and the upper vent portion of the conduit both extend substantially vertically, the inlet portion being connected at an angle to the upper portion.

10. Apparatus according to any one of the preceding claims, further characterised in that the fluid comprises air.

11. Apparatus according to any one of the preceding claims, further characterised in that the mechanical agitator is located in an upper portion of the draft tube.

12. Apparatus according to any one of the preceding claims, further characterised in that the lower end portion of the inlet terminates in the draft tube below the mechanical agitator.

13. Apparatus according to any one of the preceding claims, further characterised in that the vessel has an outlet in the lower end wall thereof below the draft tube.

14. Apparatus according to any one of the preceding claims, further characterised by an overflow pipe extending from an upper portion of the vessel, and a recycle slurry pipe extending into the vessel and terminating between the outer wall of the draft tube and the inner wall of the vessel adjacent the lower end portion of said draft tube.

15. Apparatus according to any one of the preceding claims, further characterised by an inlet for introducing a treating or defoaming agent into the vessel.

16. Apparatus according to any one of the preceding claims, further characterised in that the vessel comprises a first vessel in a multi-vessel apparatus for the preparation of phosphoric acid by the wet process and in which slurry is continuously circulated between and within the vessels.

17. Apparatus for the preparation of phosphoric acid from phosphate rock and sulphuric acid, comprising first and second reaction vessels, each of the vessels having a mechanical agitator positioned within a respective upright draft tube mounted within each respective vessel, characterised

# O 003 266

by an inlet for introducing reactants comprising phosphate rock and phosphoric acid to the first reaction vessel, means for introducing sulphuric acid into the second reaction vessel, means for maintaining continuous circulation of slurry between the first and second reaction vessels and means for withdrawing a slurry containing phosphoric acid and calcium sulphate from the second reaction vessel, and by a further agitator for injecting fluid under pressure to a bottom portion of the first reaction vessel to prevent appreciable settling of solids or to resuspend solids following a shutdown.

18. Apparatus according to claim 17, further characterised in that the mechanical agitators are arranged to continuously circulate slurry within each of the vessels so that the slurry flows from a bottom portion of the respective draft tube, up through the draft tube and downwardly in the space between the draft tube and the adjacent inner wall of the vessel.

19. Apparatus according to claim 17 or 18, further characterised in that the inlet for reactants includes vent means for permitting escape of gases from the first reaction vessel and for reducing foaming generated by reaction in the first reaction vessel.

20. Apparatus according to claim 17, 18 or 19, further characterised by means for applying a vacuum to the second reaction vessel to permit control of temperature in the second reaction vessel and to permit the formation of a vacuum seal between the first and second reaction vessels.

21. Apparatus according to claim 17, 18, 19 or 20, further characterised in that the inlet comprises a pipe that communicates with the interior of the draft tube in the first reaction vessel.

22. Apparatus according to any one of claims 17 to 21, further characterised by a third reslurry vessel for reslurrying phosphate rock and recycle phosphoric acid, and means interconnecting the third vessel with the inlet to the first reaction vessel.

23. Apparatus according to claim 22, further characterised in that the first vessel is a dissolver vessel for dissolving phosphate rock in the first slurry, the second reaction vessel being cooled by evaporation and functioning as a crystallizer vessel for crystallizing calcium sulphate in the second slurry, and in that the apparatus includes a fourth, filter feed, vessel, means for conducting slurry withdrawn from the second reaction vessel to the fourth vessel, and an agitator in the fourth, filter feed, vessel for maintaining the slurry therein in suspension.

24. Apparatus according to claim 23, further characterised in that the means for conducting slurry withdrawn from the second reaction vessel to the fourth vessel comprises a surge tank.

25. Apparatus according to claim 23 or 24, further characterised by means for conducting slurry from the fourth filter feed vessel to filter means arranged to filter crystalline calcium sulphate from the slurry, and means for conducting filtrate containing phosphoric acid from the filter means to the third vessel.

26. Apparatus according to claim 23, 24 or 25, further characterised by a rock box in the means for conducting slurry withdrawn from the second reaction vessel to the fourth vessel for trapping relatively large rocks, stones and other objects in the slurry.

27. Apparatus according to any one of claims 23 to 26, further characterised in that the first dissolver vessel is positioned at an elevation higher than the fourth filter feed vessel, and by an overflow pipe from the first vessel to the fourth vessel for conducting overflow slurry from the first vessel by gravity to the fourth vessel.

28. Apparatus according to any one of claims 18 to 27, further characterised in that the second reaction vessel is positioned at an elevation higher than the first reaction vessel, and by an overflow conduit permitting flow of the second slurry in the second vessel by gravity through the overflow conduit to the first slurry in the first vessel.

29. Apparatus according to any one of claims 17 to 28, further characterised in that the means for introducing sulphuric acid into the second vessel comprises an inlet connected to a sparger.

30. Apparatus according to any one of claims 17 to 29, further characterised by a first recirculation conduit for selectively recirculating the first slurry from the first vessel externally thereof and back to the first vessel, a first pump in the first recirculation conduit, a second recirculation conduit for selectively recirculating the second slurry from the second vessel externally thereof and back to the second vessel, a second pump in the second recirculation conduit, and valve means for discontinuing slurry flow in a first conduit from the first vessel to the second vessel during recirculation of slurry through the first recirculation conduit or during recirculation of slurry through the second recirculation conduit.

31. A process for the preparation of phosphoric acid from phosphate rock and sulphuric acid, comprising adding phosphate rock and phosphoric acid to a first reaction vessel containing a first slurry comprising calcium sulphate, monocalcium phosphate and phosphoric acid, whereby the added phosphate rock is substantially converted to monocalcium phosphate, calcium sulphate and phosphoric acid, continually circulating the first slurry within the first reaction vessel by means of a mechanical agitator disposed within a draft tube, adding sulphuric acid to react with the monocalcium phosphate to form calcium sulphate and phosphoric acid, and separating at least a portion of the product so formed into a liquid component comprising phosphoric acid and a solid component comprising calcium sulphate, characterised in that the first slurry in the first vessel is further agitated by supply of fluid under pressure to a bottom portion of the first vessel to prevent appreciable settling of solids or to resuspend settled solids following a shutdown, in that a portion of the first slurry from the first vessel is

16

continually transferred from the first vessel to a second reaction vessel containing a second slurry comprising calcium sulphate, monocalcium phosphate, sulphuric acid and phosphoric acid, in that the sulphuric acid is added to the second vessel and continuous circulation is maintained of the second slurry within the second vessel, and in that a portion of the slurry in the second vessel is continually transferred from the second vessel to the first vessel.

32. A process according to claim 31, further characterised in that the portion of the product separated into the liquid component comprising phosphoric acid and the solid component comprising calcium sulphate is withdrawn from the second vessel.

33. A process for the production of phosphoric acid according to claim 31 or claim 32, further characterised by the initial steps of substantially filling at least the first and second vessels with phosphoric acid at a temperature in the range of 165 to 215°F (74 to 102°C) and having a $P_2O_5$ analysis in the range of about 28 to about 38% by weight, circulating a portion of the acid from the first vessel to the second vessel, feeding phosphate rock to a third vessel that communicates with the first reaction vessel, cycling fluid from the first and second vessels to a fourth vessel as the volume of the fluid increases by reaction and foam formation, recycling the fluid from the fourth vessel to the third vessel; adding sulphuric acid to the second vessel to cause precipitation of calcium sulphate whereby the phosphoric acid strength in the second vessel is increased to within the range about 36% to about 42% $P_2O_5$ by weight and the solids component of the contents of the second vessel is in the range of about 25% to 35%, transporting said contents containing in the range of 25% to 35% solids from the second vessel to a separation section where phosphoric acid is separated from the calcium sulphate, and recycling a portion of the separated phosphoric acid to the third vessel.

34. A process according to claim 33, further characterised in that the vessels are at least partly filled with hot water and the water is then removed prior to substantially filling the vessels with phosphoric acid.

35. A process according to claim 33 or 34, further characterised in that the phosphoric acid is heated by substantially filling the first, second and third vessels with phosphoric acid at a temperature below about 165°F (74°C) and a $P_2O_5$ content greater than about 38% by weight and then introducing sufficient steam into at least one said vessel to cause the phosphoric acid to reach a temperature in the range of 165 to 215°F (74 to 102°C) and, by dilution from the condensed steam, a $P_2O_5$ analysis of at least 28% by weight.

36. A process according to claim 35, further characterised in that steam is introduced into the first vessel.

37. A process according to any one of claims 33 to 36, further characterised in that prior to said addition of phosphate rock to the third vessel, sufficient phosphoric acid is added to the fourth vessel to permit a pump to operate.

38. A process according to any one of claims 31 to 37, further characterised in that the second reaction vessel is maintained under vacuum to effect temperature control in the second reaction vessel and to form a vacuum seal between the first and second reaction vessels.

39. A process according to any one of claims 31 to 38 further characterised in that the soluble sulphate content of the slurry in the first vessel is maintained at a negative level and the soluble sulphate content of the slurry in the second vessel is maintained at a positive level.

40. A process according to claim 39, further characterised in that the soluble sulphate content of the slurry in the first vessel is controlled by regulation of the addition of sulphuric acid to the second vessel and/or the rate of addition of phosphate rock to the third vessel and/or the recycling of slurry between the second and first vessels.

41. A process according to any one of claims 31 to 40, further characterised in that the temperature of the slurry is allowed to increase by the effect of heat generated by the reaction of sulphuric acid with monocalcium phosphate to a temperature in the range about 200 to 215°F (93 to 102°C), and then the temperature in the second vessel is maintained in the range about 202 to 210°F (94 to 99°C) by applying a vacuum to the second vessel.

42. A process according to any one of claims 31 to 41, further characterised in that gases are permitted to escape from the first reaction vessel through venting means thereby reducing foaming generated by reaction in the first reaction vessel.

43. A process according to any one of claims 31 to 42, further characterised in that a defoaming agent is introduced to the first reaction vessel.

44. A method of dissolving phosphate rock in phosphoric acid, characterised by the introduction of phosphate rock, sulphate ions and phosphoric acid into the vessel of apparatus in accordance with any one of claims 1 to 16, and supplying fluid to a bottom portion of the vessel under sufficient pressure to prevent appreciable settling of solids or to resuspend settled solids following a shutdown.

45. A method according to claim 44, further characterised in that the reactants are introduced into the vessel in the form of a slurry comprising phosphate rock, monocalcium phosphate, phosphoric acid and calcium sulphate.

# 0 003 266

**Patentansprüche**

1. Vorrichtung zum Umsetzen oder Lösen von Feststoffpartikeln und einer Flüssigkeit, welche einen Kessel, ein in ein aufrecht innerhalb des Kessels angebrachtes Saugrohr, einen innerhalb des Saugrohrs angeordneten mechanischen Rührer, und einen Einlaß zum Eingeben einer Beschickungsaufschlämmung in den Kessel aufweist, gekennzeichnet durch einen weiteren Rührer, der Mittel zum Einspritzen eines unter Druck gesetzten Fluids zu einem Bodenabschnitt des Kessels, um beträchtliches Absetzen von Feststoffen zu verhindern, oder um abgesetzte Feststoffe nach einer Betriebsunterbrechung zu resuspendieren, aufweist.

2. Vorrichtung nach Anspruch 1, ferner dadurch gekennzeichnet, daß das unter Druck gesetzte Fluid ein gasförmiges Fluid ist.

3. Vorrichtung nach Anspruch 1 oder Anspruch 2, ferner dadurch gekennzeichnet, daß der weitere Rührer derart angeordnet ist, um Fluid unterhalb eines unteren Abschnitts des Saugrohres zuzuführen.

4. Vorrichtung nach einem der Ansprüche 1 bis 3, ferner dadurch gekennzeichnet, daß das Saugrohr einen nach außen erweiterten unteren Randabschnitt besitzt, der im Bodenabschnitt des Kessels endet.

5. Vorrichtung nach Anspruch 3 oder 4, ferner dadurch gekennzeichnet, daß die untere Endwand des Kessels benachbart dem unteren Ende des Saugrohres nach unten abgerundet ist.

6. Vorrichtung nach einem der Ansprüche 1 bis 5, ferner dadurch gekennzeichnet, daß der Einlaß eine Leitung aufweist, deren unteres Ende innerhalb des Saugrohres endet.

7. Vorrichtung nach einem der vorangehenden Ansprüche, ferner dadurch gekennzeichnet, daß der Einlaß Belüftungseinrichtungen einschließt, um Schäumen, das durch die Reaktion im Kessel entsteht, zu vermindern und Blockierung des Einlasses zu verhindern.

8. Vorrichtung nach einem der vorangehenden Ansprüche, ferner dadurch gekennzeichnet, daß der Einlaß eine Leitung aufweist, die einen länglichen Abschnitt, der sich nach unten innerhalb des Kessels erstreckt, besitzt, einen oberen Belüftungsabschnitt, der sich extern des Rührkessels befindet, und einen Einlaßabschnitt, der mit dem oberen Abschnitt verbunden ist und durch den Aufschlämmung zugeführt wird.

9. Vorrichtung nach Anspruch 8, ferner dadurch gekennzeichnet, daß der längliche Abschnitt und der obere Belüftungsabschnitt der Leitung sich im wesentlichen vertikal erstrecken, wobei der Einlaßabschnitt, in einem Winkel mit dem oberen Abschnitt verbunden ist.

10. Vorrichtung nach einem der vorangehenden Ansprüche, ferner dadurch gekennzeichnet, daß das Fluid Luft aufweist.

11. Vorrichtung nach einem der vorangehenden Ansprüche, ferner dadurch gekennzeichnet, daß der mechanische Rührer in einem oberen Abschnitt des Saugrohres angeordnet ist.

12. Vorrichtung nach einem der vorangehenden Ansprüche, ferner dadurch gekennzeichnet, daß der untere Endabschnitt des Einlasses im Saugrohr unterhalb des mechanischen Rührers endet.

13. Vorrichtung nach einem der vorangehenden Ansprüche, ferner dadurch gekennzeichnet, daß der Kessel einen Auslaß in seiner unteren Endwand, unterhalb des Saugrohres besitzt.

14. Vorrichtung nach einem der vorangehenden Ansprüche, ferner gekennzeichnet, durch ein Überlaufrohr, das sich von einem oberen Abschnitt des Kessels aus erstreckt und ein Aufschlämmungsrückführrohr, das sich in den Kessel erstreckt und zwischen der äußeren Wand des Saugrohrs und der inneren Wand des Kessels, benachbart dem unteren Endabschnitt des Saugrohres, endet.

15. Vorrichtung nach einem der vorangehenden Ansprüche, ferner gekennzeichnet durch einen Einlaß zum Einführen eines Behandlungs- oder Entschäumungsmittels in den Kessel.

16. Vorrichtung nach einem der vorangehenden Ansprüche, ferner dadurch gekennzeichnet, daß der Kessel einen ersten Kessel in einer Mehrkesselanlage zur Herstellung von Phosphorsäure im Naßverfahren aufweist, in welchem Aufschlämmung kontinuierlich zwischen den und unterhalb der Kessel umgewälzt wird.

17. Vorrichtung zur Herstellung von Phosphorsäure aus Phosphatgestein und Schwefelsäure, welche erste und zweite Reaktionskessel aufweist, wobei in jedem Kessel jeweils ein mechanischer Rührer innerhalb eines senkrechten Saugrohrs, das innerhalb jedes Kessels befestigt ist, angeordnet is, gekennzeichnet durch einen Einlaß zur Zuführung von Reaktanden in den ersten Reaktionskessel, die Phosphatgestein und Phosphorsäure aufweisen; eine Einrichtung zum Zuführen von Schwefelsäure in den zweiten Reaktionskessel; Einrichtungen zum Aufrechterhalten eines kontinuierlichen Umlaufs von Aufschlämmung zwischen dem ersten und zweiten Reaktionskessel; und Mittel zum Abziehen einer Phosphorsäure und Calciumsulphat enthaltenden Aufschlämmung aus dem zweiten Reaktionskessel; und einen weiteren Rührer zum Einsprühen von Fluid unter Druck in einen Bodenabschnitt des ersten Reaktionskessels, um ein merkliches Absetzen von Feststoffen zu verhindern oder um Feststoffe nach einer Betriebsstillsetzung zu resuspendieren.

18. Vorrichtung nach Anspruch 17, ferner dadurch gekennzeichnet, daß die mechanischen Rührer zum kontinuierlichen Umwälzen von Aufschlämmung innerhalb jedes Kessels angeordnet sind, so daß die Aufschlämmung von einem Bodenabschnitt des entsprechenden Saugrohres durch das Saugrohr nach oben und, in den Raum zwischen dem Saugrohr und der benachbarten Innenwand des Kessels nach unten fließt.

19. Vorrichtung nach Anspruch 17 oder 18, ferner dadurch gekennzeichnet, daß der Einlaß für Reaktanden Belüftungseinrichtungen, die das Entweichen von Gasen aus dem ersten Reaktionskessel ermöglichen und zum Reduzieren des Schäumens, das durch Reaktion im ersten Reaktionskessel hervorgerufen wird, einschließt.

20. Vorrichtung nach Anspruch 17, 18 oder 19, ferner gekennzeichnet durch Einrichtungen zum Anlegen eines Vakuums an den zweiten Reaktionskessel, um Temperatursteuerung im zweiten Reaktionskessel zu erlauben und um die Bildung einer Vakuumabdichtung zwischen dem ersten und zweiten Reaktionskessel zu ermöglichen.

21. Vorrichtung nach Anspruch 17, 18, 19 oder 20, ferner dadurch gekennzeichnet, daß der Einlaß eine Röhre aufweist, die mit dem Inneren des Saugrohres im ersten Reaktionskessel kommuniziert.

22. Vorrichtung nach einem der Ansprüche 17 bis 21, ferner gekennzeichnet durch einen dritten Wiederaufschlämmungskessel zum Wiederaufschlämmen von Phosphatgestein und Rückführen von Phosphorsäure; und Einrichtungen zum Verbinden des dritten Kessels mit dem Einlaß zu ersten Reaktionskessel.

23. Vorrichtung nach Anspruch 22, ferner dadurch gekennzeichnet, daß der erste Kessel ein Löse-Kessel zu Auflösen von Phosphatgestein in der ersten Aufschlämmung ist, der zweite Reaktionskessel durch Verdampfung gekühlt wird und als Kristallisierungs-Kessel zum Kristallisieren von Calciumsulfat in der zweiten Aufschlämmung ist; und daß die Vorrichtung einen vierten, über einen Filter beschickten Kessel, Einrichtungen zum Leiten der aus dem zweiten Reaktionskessels abgezogenen Aufschlämmung zum vierten Kessel, und einen Rührer im vierten, über einen Filter beschickten Rührkessel zum In-Suspension-Halten der Aufschlämmung darin, einschließt.

24. Vorrichtung nach Anspruch 23, ferner dadurch gekennzeichnet, daß die Einrichtungen zum Leiten von aus dem zweiten Reaktionskessel abgezogener Aufschlämmung zum vierten Kessel einen Puffertank aufweisen.

25. Vorrichtung nach Anspruch 23 oder 24, ferner gekennzeichnet durch Einrichtungen zum Leiten von Aufschlämmung vom vierten, über einen Filter beschickten Rührkessel zu Filtereinrichtungen, die zum Ausfiltern von kristallinem Calciumsulfat aus der Aufschlämmung angeordnet sind, und Einrichtungen zum Leiten des Phosphorsäure enthaltenden Filtrats von den Filtereinrichtungen zum dritten Kessel.

26. Vorrichtung nach Anspruch 23, 24 oder 25, ferner gekennzeichnet durch ein Gesteins-Gefäß in der Vorrichtung zum Leiten von aus dem zweiten Reaktionskessel abgezogener Aufschlämmung zum vierten Kessel, um relativ große Gesteinsbrocken, Steine und andere Gegenstände in der Aufschlämmung abzufangen.

27. Vorrichtung nach einem der Ansprüche 23 bis 26, ferner dadurch gekennzeichnet, daß der erste Lösekessel höher als der vierte über einen Filter beschickte Kessel angeordnet ist und daß ein Überlaufrohr vom ersten Kessel zum vierten Kessel zum Leiten von Überlaufaufschlämmung durch Schwerkraft vom ersten Kessel zum vierten Kessel vorgesehen ist.

28. Vorrichtung nach einem der Ansprüche 18 bis 27, ferner dadurch gekennzeichnet, daß der zweite Reaktionskessel höher als der erste Reaktionskessel angeordnet ist und daß eine Überlaufleitung, Fließen der zweiten Aufschlämmung im zweiten Kessel durch Schwerkraft durch die Überlaufleitung zur ersten Aufschlämmung im ersten Kessel erlaubt, vorgesehen ist.

29. Vorrichtung nach einem der Ansprüche 17 bis 28, ferner dadurch gekennzeichnet, daß die Einrichtung zum Einführen von Schwefelsäure in den zweiten Kessel einen mit einem Aufgußapparat verbundenen Einlaß aufweist.

30. Vorrichtung nach einem der Ansprüche 17 bis 29, ferner gekennzeichnet durch eine erste Rückführungsleitung zum selektiven Rückführen der ersten Aufschlämmung aus dem ersten Kessel aus demselben und in den ersten Kessel zurück, eine erste Pumpe in der ersten Rückführleitung, eine zweite Rückführleitung zum selektiven Rückführen der zweiten Aufschlämmung des zweiten Kessels aus diesem und zurück zum zweiten Kessel, eine zweite Pumpe in der zweiten Rückführleitung, und Ventileinrichtungen zum Abstellen des Aufschlämmungsflusses in einer ersten Leitung aus dem ersten Kessel zum zweiten Kessel während des Rückführens von Aufschlämmung durch die erste Rückführleitung oder während des Rückführens von Aufschlämmung durch die zweite Rückführleitung.

31. Ein Verfahren zur Herstellung von Phosphorsäure aus phosphatgestein und Schwefelsäure, welches Zugeben von Phosphatgestein und Phosphorsäure zu einem ersten Reaktionskessel, der eine erste Aufschlämmung, aufweisend Calciumsulphat, Monocalciumphosphat und Phosphorsäure, enthält, wodurch das zugegebene Phosphatgestein im wesentlichen zu Monocalciumphosphate, Calciumsulfat und Phosphorsäure umgewandelt wird; kontinuierliches Im-Kreis-Führen der ersten Aufschlämmung innerhalb des ersten Reaktionskessels mittels eines mechanischen Rührers, der innerhalb eines Saugrohres angeordnet ist; Zugeben von Schwefelsäure zur Umsetzung mit dem Monocalciumphosphat, um Calciumphosphat und Phosphorsäure zu bilden; und Auftrennen mindestens eines Teiles des derart gebildeten Produktes in eine flüssige, Phosphorsäure aufweisende Komponente und eine feste, Calciumsulphat aufweisende Komponente, dadurch gekennzeichnet, daß die erste Aufschlämmung im ersten Kessel ferner durch Zufuhr von Fluid unter Druck in einen Bodenabschnitt des ersten Kessels gerührt wird, um merkliches Absetzen von Feststoffen zu verhindern oder um nach einer Betriebsstillegung abgesetzte Feststoffe zu resuspendieren, daß ein Teil der ersten Aufschlämmung aus dem ersten Kessel kontinuierlich vom ersten Kessel zu einem zweiten Reaktionskessel überführt wird, welcher eine zweite Aufschlämmung, die Calciumsulfat, Monocalciumphosphat, Schwefelsäure und Phosphorsäure aufweist, enthält; daß die Schwefelsäure zum zweiten Kessel gegeben wird und kontinuierlicher Umlauf der zweiten Aufschlämmung innerhalb des zweiten Kessels aufrechterhalten wird; und daß ein Anteil der Aufschlämmung in zweiten Kessel kontinuierlich vom zweiten Kessel zum ersten Kessel überführt wird.

32. Verfahren nach Anspruch 31, ferner dadurch gekennzeichnet, daß der Produktanteil, der in der flüssigen Komponente abgetrennt wurde, Phosphorsäure und die feste Komponente, die Calciumsulfat aufweist, aufweist aus dem zweiten Kessel abgezogen wird.

33. Verfahren zur Herstellung von Phosphorsäure nach Anspruch 31 oder 32, ferner gekennzeichnet durch den Anfangsschritt des im wesentlichen Auffüllens mindestens der ersten und zweiten Kessel mit Phosphorsäure bei einer Temperatur im Bereich zwischen 165 bis 215°F (74 bis 102°C) welche $P_2O_5$-Analysenwerte im Bereich von etwa 28 bis etwa 38 Gew.-% besitzt; Im-Kresi-Führen eines Anteils der Säure aus dem ersten Kessel zum zweiten Kessel, Zufuhr von Phosphatgestein zu einem dritten Kessel, der mit dem ersten Reaktionskessel verbunden ist, Im-Kreis-Führen von Fluid aus den ersten und zweiten Kesseln zu einem vierten Kessel, wenn das Fluidvolumen durch Reaktion und Schaumbildung ansteigt; Rückführen des Fluids aus dem vierten Kessel zum dritten Kessel; Zugabe von Schwefelsäure zum zweiten Kessel, um Ausfallen von Calciumsulfat zu bewirken, wodurch die Phosphorsäurestärke im zweiten Kessel bis in den Bereich von etwa 36 bis etwa 42 Gew.-% $P_2O_5$ gesteigert wird und die Feststoffkomponente des Inhalts des zweiten Kessels im Bereich von etwa 25% bis 35% ist; Überführen des Inhalts, der im Bereich zwischen 25% bis 35% Feststoffe enthälte, aus dem zweiten Kessel zu einem Trennabschnitt, wo Phosphorsäure vom Calciumsulphat abgetrennt wird; und Rückführen eines Teils der abgetrennten Phosphorsäure zum dritten Kessel.

34. Verfahren nach Anspruch 33, ferner dadurch gekennzeichnet, daß die Kessel mindestens teilweise mit heißem Wasser gefüllt sind und das Wasser sodann vor im wesentlichen Auffüllen der Kessel mit Phosphorsäure entfernt wird.

35. Verfahren nach Anspruch 33 oder 34, ferner dadurch gekennzeichnet, daß die Phosphorsäure durch im wesentlichen Auffüllen der ersten, zweiten und dritten Kessel mit Phosphorsäure bei einer Temperatur unterhalb etwa 165°F (74°C) und einem $P_2O_5$-Gehalt von höher als etwa 38 Gew.-% aufgeheizt wird, und sodann hinreichend Dampf in mindestens einen der Kessel eingeleitet wird, um die Phosphorsäure zum Erreichen einer Temperatur im Bereich von 165 bis 215°F (74 bis 102°C) zu veranlassen und durch Verdünnung aus dem kondensierten Dampf, eine $P_2O_5$-Analyse von mindestens 28 Gew.-% aufweist.

36. Verfahren nach Anspruch 35, ferner dadurch gekennzeichnet, daß Dampf in den ersten Kessel eingeführt wird.

37. Verfahren nach einem der Ansprüche 33 bis 36, ferner dadurch gekennzeichnet, daß vor Zugabe des Phosphatgesteins zum dritten Kessel genügend Phosphorsäure dem vierten Kessel zugeführt wird, um das Betreiben einer Pumpe zu ermöglichen.

38. Verfahren nach einem der Ansprüche 31 bis 37, ferner dadurch gekennzeichnet, daß der zweite Reaktionskessel unter Vakuum gehalten wird, um Temperatursteuerung im zweiten Reaktionskessel zu bewirken und um eine Vakuumabdichtung zwischen den ersten und zweiten Reaktionskesseln zu bilden.

39. Verfahren nach einem der Ansprüche 31 bis 38, ferner dadurch gekennzeichnet, daß der lösliche Sulfatgehalt der Aufschlämmung im ersten Kessel auf einer negativen Höhe und der Gehalt löslichen Sulfats der Aufschlämmung im zweiten Kessel auf einer positiven Höhe gehalten wird.

40. Verfahren nach Anspruch 39, ferner dadurch gekennzeichnet, daß der Gehalt an löslichem Sulfat der Aufschlämmung im ersten Kessel durch Regulierung der Zugabe von Schwefelsäure zum zweiten Kessel und/oder der Zugabegeschwindigkeit von Phosphatgestein zum dritten Kessel und/oder das Rückführen von Aufschlämmung zwischen den zweiten und ersten Kesseln gesteuert wird.

41. Verfahren nach einem der Ansprüche 31 bis 40, ferner dadurch gekennzeichnet, daß das Ansteigen der Temperatur der Aufschlämmung durch die Wirkung von durch die Reaktion von Schwefelsäure mit Monocalciumphosphat entstandene Wärme bis auf eine Temperatur im Bereich zwischen 200 bis 215°F (93 bis 102°C) erlaubt wird und anschließend die Temperatur im zweiten Kessel im Bereich zwischen etwa 202 bis 210°F (94 bis 99°C) durch Anlegen eines Vakuums an den zweiten Kessel gehalten wird.

42. Verfahren nach einem der Ansprüche 31 bis 41, ferner dadurch gekennzeichnet, daß es Gasen erlaubt wird, aus dem ersten Reaktionskessel durch Belüftungseinrichtungen zu entweichen, und dadurch, daß durch Reaktion im ersten Reaktionskessel hervorgebrachtes Schäumen vermindert wird.

43. Verfahren nach irgendeinem der Ansprüche 31 bis 42, ferner dadurch gekennzeichnet, daß ein Entschäumungsmittel in den ersten Reaktionskessel eingeführt wird.

44. Verfahren zum Auflösen von Phosphatgestein in Phosphorsäure, gekennzeichnet durch Einführen von Phosphatgestein, Sulfationen und Phosphorsäure in den Kessel einer Anlage gemäß einen der Ansprüche 1 bis 17 und Zuführen von Fluid zu einem Bodenabschnitt des Kessels unter hinreich-

## 0 003 266

endem Druck, um merkliches Absetzen von Feststoffen zu verhindern, oder um abgesetzte Feststoffe nach einer Betriebsstillegung zu resuspendieren.

45. Verfahren nach Anspruch 44, ferner dadurch gekennzeichnet, daß die Reaktanden in den Kessel in Form einer Aufschlämmung eingeführt werden, die Phosphatgestein, Monocalciumphosphat, Phosphorsäure und Calciumsulfat, aufweist.

## Revendications

1. Appareil pour faire réagir ou dissoudre un solide fragmenté en particules et un liquide, comprenant un récipient, un tube de circulation monté en position debout à l'intérieur dudit récipient, un agitateur mécanique placé à l'intérieur dudit tube de circulation et une entrée pour l'introduction d'une boue à traiter dans ledit récipient, caractérisé par un autre agitateur comportant des moyens pour injecter un fluide sous pression dans une portion inférieure dudit récipient afin d'empêcher une sédimentation appréciable des solides, ou pour remettre en suspension des solides qui se sont sédimentés par suite d'une interruption de fonctionnement.

2. Appareil selon la revendication 1, caractérisé en outre, en ce que la fluide sous pression est un fluide gazeux.

3. Appareil selon la revendication 1 ou 2, caractérisé en outre en ce oue l'autre agitateur est agencé de manière à amener du fluide au-dessous d'une portion inférieure du tube de circulation.

4. Appareil selon l'une quelconque des revendications 1 à 3, caractérisé en outre en ce que ledit tube de circulation comporte une portion, en forme de jupe inférieure évasée vers l'extérieur, se terminant dans la portion inférieure du récipient.

5. Appareil selon la revendication 3 ou 4, caractérisé en outre, en ce que la paroi de l'extrémité inférieure du récipient est bombée vers le bas à proximité de l'extrémité inférieure de tube de circulation.

6. Appareil selon l'une quelconque des revendications 1 à 5, caractérisé en outre en ce que l'entrée comprend une conduite dont l'extrémité inférieure se termine à l'intérieur du tube de circulation.

7. Appareil selon l'une quelconque des revendications précédentes, caractérisé en outre en ce que l'entrée comporte des moyens d'évent pour diminuer la formation de mousses engendrées par réaction dans ledit récipient et pour empêcher une obstruction de ladite entrée.

8. Appareil selon l'une quelconque des revendications précédentes, caractérisé en outre en ce que l'entrée comprend une conduite que comporte une portion allongée s'étendant vers le bas à l'intérieur du récipient, une portion supérieure d'évent agencée à l'extérieur du récipient et une portion d'entrée raccordée à ladite portion supérieure et par laquelle la boue est amenée.

9. Appareil selon la revendication 8, caractérisé en outre en ce que ladite portion allongée et ladite portion supérieure d'évent de la conduite s'étendent toutes deux sensiblement verticalement, ladite portion d'entrée étent raccordée selon un angle à ladite portion supérieure.

10. Appareil selon l'une quelconque des revendications précédentes, caractérisé en outre en ce que ledit fluide comprend de l'air.

11. Appareil selon l'une quelconque des revendications précédentes, caractérisé en outre en ce que ledit agitateur mécanique est agencé dans une portion supérieure dudit tube de circulation.

12. Appareil selon l'une quelconque des revendications précédentes, caractérisé en ce que la portion extrême inférieure de l'entrée se termine dans le tube de circulation au-dessous de l'agitateur mécanique.

13. Appareil selon l'une quelconque des revendications précédentes, caractérisé en outre en ce que ledit récipient comporte, dans sa paroi extrême inférieure, une sortie au-dessous dudit tube de circulation.

14. Appareil selon l'une quelconque des revendications précédentes, caractérisé en outre en ce qu'il comporte un tube de déversement s'étendant à partir d'une portion supérieure du récipient, et un tube de recyclage de boue s'étendant dans le récipient et se terminant entre la paroi extérieure dudit tube de circulation et la paroi intérieure dudit récipient, à proximité de la portion extrême inférieure dudit tube de circulation.

15. Appareil selon l'une quelconque des revendications précédentes, caractérisé en outre en ce qu'il comporte une entrée pour l'introduction d'un agent de traitement ou de suppression des mousses dans ledit récipient.

16. Appareil selon l'une quelconque des revendications précédentes, caractérisé en outre en ce que le récipient comprend un premier récipient dans un appareil à multiples récipient pour la préparation d'acide phosphorique par le procédé par voie humide et dans lequel de la boue est continuellement admise à circuler entre lesdits récipients et à l'intérieur desdits récipients.

17. Appareil pour la préparation d'acide phosphorique à partir de phosphate naturel et d'acide sulfurique, comprenant des premier et deuxième récipients de réaction qui comportent chacun un agitateur mécanique agencé à l'intérieur d'un tube de circulation respectif dressé debout et monté à l'intérieur de chaque récipient respectif, caractérisé par une entrée pour l'introduction de réactifs comprenant du phosphate naturel et de l'acide phosphorique dans le premier récipient de réaction, des moyens pour l'introduction d'acide sulfurique dans le deuxième récipient de réaction, des moyens pour maintenir une circulation continue de boue entre les premier et deuxième récipients de réaction et des moyens pour prélever une boue contenant de l'acide phosphorique et du sulfate de calcium à partir du deuxième récipient de réaction, et par un autre agitateur pour injecter un fluide sous pression dans une portion inférieure du premier récipient de réaction afin d'empêcher une sédimentation appréciable de solides ou afin de remettre des solides en suspension après une interruption du fonctionnement.

18. Appareil selon la revendication 17, caractérisé en outre en ce que les agiteteurs mécaniques sont agencés de manière à faire continuellement circuler de la boue à l'intérieur de chacun des récipients afin que la boue s'écoule à partir d'une portion inférieure du tube de circulation respectif, s'élève au travers dudit tube puis redescende dans l'espace compris entre le tube de circulation et la paroi intérieure adjacente du récipient.

19. Appareil selon la revendication 17 ou 18, caractérisé en outre en ce que l'entrée pour les réactifs comporte des moyens d'évent pour permettre l'échappement des gaz à partir du premier récipient de réaction et pour diminuer l'importance de la formation de mousses engendrées par suite d'une réaction dans le premier récipient de réaction.

20. Appareil selon la revendication 17, 18 ou 19, caractérisé en outre par des moyens pour appliquer un vide au dit deuxième récipient de réaction afin de permettre d'exercer un réglage de la température dans le deuxième récipient de réaction et afin de permettre la formation d'un joint de vide entre lesdits premier et deuxième récipients de réaction.

21. Appareil selon la revendication 17, 18, 19 ou 20, caractérisé en outre en ce que ladite entrée comprend une conduite qui communique avec l'intérieur du tube de circulation dans ledit premier récipient de réaction.

22. Appareil selon l'une quelconque des revendications 17 à 21, caractérisé en outre par un troisième récipient de remise en suspension pour remettre du phosphate naturel en suspension et pour recycler de l'acide phosphorique, et par des moyens pour raccorder le troisième récipient avec l'entrée du premier récipient de réaction.

23. Appareil selon la revendication 22, caractérisé en outre en ce que le premier récipient est un récipient de dissolution pour dissoudre du phosphate naturel dans la première boue, le deuxième récipient de réaction étant refroidi par évaporation et fonctionnant à la manière d'un récipient de cristallisation pour faire cristalliser du sulfate de calcium dans la deuxième boue, et en ce que l'appareil comporte un quatrième récipient servant à filtrer la charge à traiter, des moyens pour conduire de la boue prélevée à partir du deuxième récipient de réaction jusqu'au quatrième récipient, et un agitateur agencé dans ledit quatrième récipient de traitement à filtre pour y maintenir la boue en suspension.

24. Appareil selon la revendication 23, caractérisé en outre en ce que les moyens pour conduire de la boue prélevée depuis de la deuxième récipient de réaction jusqu'au quatrième récipient, comprennent un réservoir-tampon.

25. Appareil selon la revendication 23 ou 24, caractérisé en outre par des moyens pour conduire de la boue à partir dudit quatrième récipient de traitement à filtre jusqu'à des moyens à filtre agencés de manière à filtrer du sulfate de calcium cristallisé à partir de la boue et par des moyens pour conduire du filtrat, contenant de l'acide phosphorique, depuis lesdits moyens à filtre jusqu'au dit troisième récipient.

26. Appareil selon la revendication 23, 24 ou 25, caractérisé en outre par une boîte à minerai, agencée dans les moyens pour conduire de la boue prélevée à partir dudit deuxième récipient de réaction jusqu'au dit quatrième récipient pour retenir des fragments relativement gros de minerai, de pierres et autres objets se trouvant dans ladite boue.

27. Appareil selon l'une quelconque des revendications 23 à 26, caractérisé en outre en ce que ledit premier récipient de dissolution est placé dans une position plus élevée que ledit quatrième récipient de traitement à filtre, et par un tube de trop-plein depuis ledit premier récipient jusqu'au dit quatrième récipient pour conduire de la boue à déverser depuis ledit premier récipient, sous l'effet de la pesanteur, jusqu'au dit quatrième récipient.

28. Appareil selon l'une quelconque des revendications 18 à 27, caractérisé en outre en ce que ledit deuxième récipient de réaction est placé en une position plus élevée que le premier récipient de réaction, et par une conduite de trop-plein permettant l'écoulement de la deuxième boue dans le deuxième récipient sous l'effet de la pesanteur dans ladite conduite de trop-plein jusqu'à la première boue dans le premier récipient.

29. Appareil selon l'une quelconque des revendications 17 à 28, caractérisé en outre en ce que les moyens pour introduire de l'acide sulfurique dans le deuxième récipient comprennent une entrée raccordée à un dispositif d'arrosage.

30. Appareil selon l'une quelconque des revendications 17 à 29, caractérisé en outre par une première conduite de remise en circulation pour remettre en circulation sélectivement la première boue à partir du premier récipient, à l'extérieur de celui-ci puis avec retour au dit premier récipient, une première pompe dans la première conduite de remise en circulation, une deuxième conduite de remise en circulation pour remettre en circulation sélectivement la deuxième boue à partir du deuxième récipient à l'extérieur de celui-ci puis avec retour au dit deuxième récipient, une deuxième pompe dans la deuxième conduite de remise en circulation et des moyens du type valve pour interrompre l'écoulement de boue dans une conduite à partir du premier récipient jusqu'au deuxième récipient pendant une remise en circulation de boue dans la première conduite de remise en circulation ou pendant une remise en circulation de boue dans la deuxième conduite de remise en circulation.

31. Procédé pour la préparation d'acide phosphorique à partir de phosphate naturel et d'acide sulfurique, consistant à ajouter du phosphate naturel et de l'acide phosphorique au contenu d'un premier récipient de réaction contenant une première boue comprenant du sulfate de calcium, du phosphate monocalcique et de l'acide phosphorique, ensuite de quoi le phosphate naturel ajouté est substantiellement converti en phosphate monocalcique, sulfate de calcium et acide phosphorique, à faire circuler continuellement la première boue à l'intérieur du premier récipient de réaction à l'aide d'un agitateur mécanique agencé à l'intérieur d'un tube de circulation, à ajouter de l'acide sulfurique afin qu'il réagisse avec la phosphate monocalcique pour former du sulfate de calcium et de l'acide phosphorique, et à séparer au moins une portion du produit ainsi formé en un composant liquide comprenant de l'acide phosphorique et en un composant solide comprenant du sulfate de calcium, caractérisé en ce que la première boue dans le premier récipient est en outre agitée par amenée de fluide sous pression jusqu'à une portion inférieure dudit premier récipient afin d'empêcher une sédimentation appréciable de solides ou afin de remettre en suspension des solides qui se sont sédimentés à la suite d'une interruption de fonctionnement; en ce qu'une portion de la première boue provenant du premier récipient est continuellement transférée du premier récipient à un deuxième récipient de réaction contenant une deuxième boue comprenant du sulfate de calcium, du phosphate monocalcique, de l'acide sulfurique et de l'acide phosphorique, et en ce que l'acide sulfurique est ajouté au deuxième récipient, cependant qu'une circulation continue de la deuxième boue est maintenue à l'intérieur du deuxième récipient, et aussi en ce qu'une portion de la boue dans le deuxième récipient est continuellement transférée du deuxième récipient au premier récipient.

32. Procédé selon la revendication 31, caractérisé en outre en ce qu'une portion du produit séparé en le composant liquide comprenant de l'acide phosphorique et en le composant solide comprenant du sulfate de calcium est prélevée à partir du deuxième récipient.

33. Procédé pour la production l'acide phosphorique selon la revendication 31 ou 32, caractérisé en outre par les opérations initiales consistant essentiellement à remplir pratiquement au moins les premier et deuxième récipients avec de l'acide phosphorique à une température comprise dans l'intervalle s'étendant entre 74 et 102°C et ayant une teneur en $P_2O_5$ comprise entre environ 28 et environ 38% en poids, à faire circuler une portion de l'acide depuis le premier récipient jusqu'au deuxième récipient, à amener du phosphate naturel jusqu'à un troisième récipient qui communique avec le premier récipient de réaction, à recycler du fluide provenant des premier et deuxième récipients jusqu'à un quatrième récipient lorsque le volume de fluide augmente par suite d'une réaction et de la formation de mousses, à recycler le fluide provenant du quatrième récipient jusqu'au troisième récipient; à ajouter de l'acide sulfurique au contenu du deuxième récipient pour provoquer une précipitation de sulfate de calcium, afin que la concentration d'acide phosphorique dans le deuxième récipient soit augmentée jusqu'à se trouver comprise entre environ 36% et environ 42% de $P_2O_5$ en poids et afin que la teneur en solides du contenu du deuxième récipient se trouve comprise entre environ 25% et 35%, à transporter ledit conteu (ayant une teneur en solides comprise entre 25% et 35%) depuis le deuxième récipient jusqu'à une section de séparation où de l'acide phosphorique est séparé du sulfate de calcium, et à recycler une portion de l'acide phosphorique, ainsi séparé, jusqu'au troisième récipient.

34. Procédé selon la revendication 33, caractérisé en outre en ce que les récipients sont au moins partiellement remplis avec de l'eau chaude, et en ce que l'eau est ensuite enlevée avant de remplir pratiquement les récipients avec de l'acide phosphorique.

35. Procédé selon la revendication 33 ou 34, caractérisé en outre en ce que l'acide phosphorique est chauffé en remplissant pratiquement les premier, deuxième et troisième récipients avec de l'acide phosphorique à une température inférieure à environ 74°C et à une teneur en $P_2O_5$ supérieure à environ 38% en poids, puis en introduisant suffisamment de vapeur d'eau dans au moins un desdits récipients afin de provoquer l'élévation de la température de l'acide phosphorique jusqu'à une valeur comprise entre 74°C et 102°C, et, par suite de la dilution provoquée par la vapeur d'eau condensée, jusqu'à une teneur en $P_2O_5$ égale à au moins 28% en poids.

36. Procédé selon la revendication 35, caractérisé en outre en ce que l'on introduit de la vapeur d'eau dans le premier récipient.

37. Procédé selon l'une quelconque des revendications 33 à 36, caractérisé en outre en ce que, avant ladite addition de phosphate naturel au troisième récipient, on ajoute suffisamment d'acide phosphorique au quatrième récipient pour permettre à une pompe de fonctionner.

38. Procédé selon l'une quelconque des revendications 31 à 37, caractérisé en outre en ce que le deuxième récipient de réaction est maintenu sous vide afin de régler la température dans ledit deuxième récipient de réaction et afin de constituer un joint de vide entre les premier et deuxième récipients de réaction.

39. Procédé selon l'une quelconque des revendications 31 à 38, caractérisé en outre en ce que la teneur en sulfate soluble de la boue dans le premier récipient est maintenue à une valeur négative et la teneur en sulfate soluble de la boue dans le deuxième récipient est maintenue à une valeur positive.

40. Procédé selon la revendication 39, caractérisé en outre en ce que la teneur en sulfate soluble de la boue dans le premier récipient est commandée et réglée en réalisant une régulation de l'addition d'acide sulfurique au deuxième récipient et/ou en agissant sur l'allure d'addition de phosphate naturel au troisième récipient et/ou en recyclant de la boue entre les deuxième et premier récipients.

41. Procédé selon l'une quelconque des revendications 31 à 40, caractérisé en outre en ce qu'il est permis à la température de la boue de s'accroître, par suite de l'effet de la chaleur engendrée par le réaction de l'acide sulfurique avec du phosphate monocalcique, jusqu'à une température comprise entre environ 93°C et 102°C, et alors la température régnant dans le deuxième recipient est maintenue dans l'intervalle s'étendant entre 94°C et 99°C par application d'un vide au deuxième récipient.

42. Procédé selon l'une quelconque des revendications 31 à 41, caractérisé en outre en ce qu'il est permis aux gaz de s'échapper, à partir du premier récipient de réaction par des moyens d'évent afin de diminuer la formation de mousses engendrées par une réaction s'effectuant dans ledit premier récipient de réaction.

43. Procédé selon l'une quelconque des revendications 31 à 42, caractérisé en outre en ce que l'on introduit un agent anti-mousses dans le premier récipient de réaction.

44. Procédé pour la dissolution de phosphate naturel dans de l'acide phosphorique, caractérisé par l'introduction de phosphate naturel des ions sulfate et de l'acide phosphorique dans le récipient d'un appareil tel que spécifié dans l'une quelconque des revendications 1 à 16, et à amener un fluide jusqu'à une portion inférieure du récipient sous une pression suffisante pour empêcher qu'il se produise une sédimentation appréciable de solides ou pour remettre en suspension des solides sédimentés à la suite d'une interruption de fonctionnement.

45. Procédé selon la revendication 44, caractérisé en outre en ce que l'on introduite les réactifs dans le récipient sous la forme d'une boue comprenant du phosphate naturel, du phosphate monocalcique, de l'acide phosphorique et du sulfate de calcium.

Fig 1

0 003 266

Fig 2

Fig 3

0 003 266

Fig 4

Fig 5